# EUROPEAN PATENT APPLICATION

(11) **EP 4 765 987 A1**
(43) Date of publication of application: **24.06.2026**
(21) Application number: 24870439.7
(22) Date of filing: 11.09.2024
(51) Int. Cl.: H04W 72/21

(54) **TRANSMISSION METHOD AND TRANSMISSION APPARATUS**

(30) Priority: 27.09.2023 CN 202311270915
(71) Applicant: HUAWEI TECHNOLOGIES CO., LTD., Shenzhen 518129 (CN)
(72) Inventor: LIU, Nannan, Shenzhen, Guangdong 518129 (CN); LI, Bingzhao, Shenzhen, Guangdong 518129 (CN); CHANG, Junren, Shenzhen, Guangdong 518129 (CN); QIANG, Li, Shenzhen, Guangdong 518129 (CN); ZENG, Qinghai, Shenzhen, Guangdong 518129 (CN)
(74) Representative: Goddar, Heinz J.
(86) International application number: PCT/CN2024/118123
(87) International publication number: WO 2025/066895

(57) **Abstract**

Embodiments of this application provide a transmission method and a transmission apparatus, so that a network device learns that a second data set of a terminal device has been generated. The method includes: A terminal device sends first indication information, where the first indication information indicates that a second data set has been generated.

## Description

This application claims priority to Chinese Patent Application No. 202311270915.X, filed with the China National Intellectual Property Administration on September 27, 2023 and entitled "TRANSMISSION METHOD AND TRANSMISSION APPARATUS", which is incorporated herein by reference in its entirety.

### TECHNICAL FIELD

Embodiments of this application relate to the communication field, and more specifically, to a transmission method and a transmission apparatus.

### BACKGROUND

In a mobile communication system, a large amount of burst data needs to be processed. For example, in a cloud-based photo enhancement scenario, there is burst data. Generally, after a terminal device takes a photo locally, the terminal device performs image processing locally, to enhance picture quality. Common image post-processing technologies include denoising, super resolution, low-light enhancement, beautification, and the like. Some of the processing needs high computational power, local processing of the terminal device is limited by a processing capability of the terminal device, and it is quite difficult to improve processing quality that has reached a specific level. Cloud-based photo enhancement means that the terminal device uploads the photo to cloud for processing. This requires a user to upload the photo to the cloud after taking the photo. The cloud processes the photo, and then returns a processed photo to the terminal device. The terminal device displays the photo to the user.

However, in the cloud-based photo enhancement scenario, because a data amount of each photo is large, and a photographing action is not periodic but bursty, a series of related problems are caused.

### SUMMARY

Embodiments of this application provide a transmission method and a transmission apparatus, so that a network device learns that a second data set of a terminal device has been generated.

To achieve the foregoing objective, the following technical solutions are used in this application.

According to a first aspect, a transmission method is provided. The method may be performed by a terminal device, may be performed by a component in the terminal device, for example, a processor, a chip, or a chip system in the terminal device, or may be implemented by a logic module or software that can implement all or a part of functions of the terminal device. For example, the method may be performed by the terminal device. The method includes: The terminal device sends first indication information, where the first indication information indicates that a second data set has been generated.

According to the transmission method provided in this embodiment of this application, the terminal device sends, to a network device, the first indication information indicating that the second data set has been generated, so that the network device learns that the second data set of the terminal device has been generated. Further, the network device may perform adjustment such as resource scheduling based on the first indication information, so that a data transmission delay requirement can be ensured, and user experience can be improved.

In this embodiment of this application, that the terminal device sends the first indication information includes: When a first condition is satisfied, or when a first condition and a second condition are satisfied, the terminal device sends the first indication information, where the first condition includes that the second data set has been generated or that the terminal device determines that the second data set has been generated; and the second condition includes that an access AS layer of the terminal device has not obtained the second data set or that transmission of a first data set has not been completed, where the first data set is transmitted before the second data set. In this way, when the first condition is satisfied, or when the first condition and the second condition are satisfied, the terminal device sends the first indication information.

In this embodiment of this application, that the second data set has been generated includes: The AS layer of the terminal device determines, based on first information from an application APP layer of the terminal device, that the second data set has been generated; or the AS layer of the terminal device receives first information from an APP layer of the terminal device, where the first information indicates that the second data set has been generated. In this way, the AS layer of the terminal device can learn, based on the first information, that the second data set has been generated.

In this embodiment of this application, that transmission of the first data set has not been completed includes: One or more of a first logical channel LCH, a first packet data convergence protocol PDCP entity, a first radio link control RLC entity, a first data radio bearer DRB, the AS layer of the terminal device, and the APP layer of the terminal device include data in the first data set.

In this embodiment of this application, the second data set is associated with one or more of the first LCH, the first PDCP entity, the first RLC entity, the first DRB, and a first quality of service QoS flow; and/or the first data set is associated with one or more of the first LCH, the first PDCP entity, the first RLC entity, the first DRB, and the first QoS flow.

In this embodiment of this application, that the second data set has been generated includes: Partial data in the second data set has been generated; or all data in the second data set has been generated.

In this embodiment of this application, the first indication information includes information about a data amount of the second data set. In this way, the network device can learn of the information about the data amount of the second data set by using the first indication information.

In this embodiment of this application, the method further includes: When transmission of the first data set is completed, the terminal device sends fourth indication information, where the fourth indication information indicates that sending of data in the first data set is completed, and the first data set is transmitted before the second data set. In this way, the network device can determine, based on the fourth indication information, that sending of the data in the first data set is completed.

In this embodiment of this application, the method further includes: The terminal device sends third indication information, where the third indication information indicates a data amount of a third data set, the third data set is the first data set or the second data set, the first data set is transmitted before the second data set, and the data amount of the third data set includes a data amount of data that is in the third data set and that the APP layer of the terminal device includes. In this way, the network device can determine the data amount of the third data set based on the third indication information.

In this embodiment of this application, the method further includes: The terminal device sends second indication information, where the second indication information indicates waiting time, remaining time, or generation time of the second data set, and the waiting time or the remaining time is determined based on the generation time of the second data set. In this way, the network device can determine the waiting time, the remaining time, or the generation time of the second data set based on the second indication information.

According to a second aspect, a transmission method is provided. The method may be performed by a terminal device, may be performed by a component in the terminal device, for example, a processor, a chip, or a chip system in the terminal device, or may be implemented by a logic module or software that can implement all or a part of functions of the terminal device. For example, the method may be performed by the terminal device. The method includes: The terminal device sends second indication information, where the second indication information indicates waiting time, remaining time, or generation time of a second data set, and the waiting time or the remaining time is determined based on the generation time of the second data set.

According to the transmission method provided in this embodiment of this application, the terminal device sends, to a network device, the second indication information indicating the waiting time or the remaining time of the second data set, so that the network device learns of the waiting time, the remaining time, or the generation time of the second data set. Further, the network device may perform adjustment such as resource scheduling based on the second indication information, for example, perform transmission of data in the second data set at a higher rate, to ensure a data transmission delay requirement of the second data set. Alternatively, for example, the network device may determine an end of the second data set.

In this embodiment of this application, the waiting time includes: waiting time of the second data set before arrival at an access AS layer of the terminal device; or waiting time of the second data set at an application APP layer of the terminal device.

In this embodiment of this application, that the remaining time is determined based on the generation time of the second data set includes: The remaining time is determined based on the generation time of the second data set and first time, where the first time is sending time of the second indication information, generation time of the second indication information, determining time of the second indication information, time separated from the sending time of the second indication information by first duration, time separated from the generation time of the second indication information by second duration, or time separated from the determining time of the second indication information by third duration.

In this embodiment of this application, that the terminal device sends the second indication information includes: When a third condition is satisfied, or when a third condition and a fourth condition are satisfied, the terminal device sends the second indication information, where the third condition includes that the AS layer of the terminal device obtains the second data set; and
the fourth condition includes that transmission of a first data set has not been completed when the second data set is generated, where the first data set is transmitted before the second data set. In this way, when the third condition is satisfied, or when the third condition and the fourth condition are satisfied, the terminal device sends the second indication information.

In this embodiment of this application, transmission of the first data set has not been completed includes: Any one or more of a first logical channel LCH, a first packet data convergence protocol PDCP entity, a first radio link control RLC entity, a first data radio bearer DRB, the AS layer of the terminal device, and the APP layer of the terminal device include data in the first data set.

In this embodiment of this application, the second data set is associated with any one or more of the first LCH, the first PDCP entity, the first RLC entity, the first DRB, and a first quality of service QoS flow; and/or the first data set is associated with any one or more of the first LCH, the first PDCP entity, the first RLC entity, the first DRB, and the first QoS flow.

In this embodiment of this application, the generation time of the second data set includes: generation time of partial data in the second data set; or generation time of all data in the second data set.

In this embodiment of this application, the second indication information further includes information about a data amount of the second data set. In this way, the network device can learn of the information about the data amount of the second data set by using the second indication information.

In this embodiment of this application, the method further includes: When transmission of the first data set is completed, the terminal device sends fourth indication information, where the fourth indication information indicates that sending of data in the first data set is completed, and the first data set is transmitted before the second data set. In this way, the network device can determine, based on the fourth indication information, that sending of the data in the first data set is completed.

In this embodiment of this application, the method further includes: The terminal device sends third indication information, where the third indication information indicates a data amount of a third data set, the third data set is the first data set or the second data set, the first data set is transmitted before the second data set, and the data amount of the third data set includes a data amount of data that is in the third data set and that the application APP layer of the terminal device includes. In this way, the network device can learn of the information about the data amount of the second data set by using the third indication information.

According to a third aspect, a transmission method is provided. The method may be performed by a terminal device, may be performed by a component in the terminal device, for example, a processor, a chip, or a chip system in the terminal device, or may be implemented by a logic module or software that can implement all or a part of functions of the terminal device. For example, the method may be performed by the terminal device. The method includes: The terminal device sends third indication information, where the third indication information indicates a data amount of a third data set, and the data amount of the third data set includes a data amount of data that is in the third data set and that an application APP layer of the terminal device includes.

In this embodiment of this application, the terminal device sends, to a network device, the third indication information indicating the data amount of the third data set, so that the network device learns of the data amount of the third data set. Further, the network device may perform adjustment such as resource scheduling based on the third indication information, to ensure a data transmission delay requirement. Alternatively, for example, the network device may determine an end of the third data set.

In this embodiment of this application, that the terminal device sends the third indication information includes: When the third data set has been generated, or when the terminal device determines that the third data set has been generated, the terminal device sends the third indication information.

In this embodiment of this application, that the third data set has been generated includes: Partial data in the third data set has been generated; or
all data in the third data set has been generated.

In this embodiment of this application, that the terminal device determines that the third data set has been generated includes: An AS layer of the terminal device determines, based on third information from the application APP layer of the terminal device, that the third data set has been generated; or an AS layer of the terminal device receives third information from the APP layer of the terminal device, where the third information indicates that the third data set has been generated.

In this embodiment of this application, the method further includes: When transmission of the third data set is completed, the terminal device sends fourth indication information, where the fourth indication information indicates that transmission of the third data set is completed. In this way, the network device can determine, based on the fourth indication information, that sending of data in a first data set is completed.

According to a fourth aspect, a transmission method is provided. The method may be performed by a terminal device, may be performed by a component in the terminal device, for example, a processor, a chip, or a chip system in the terminal device, or may be implemented by a logic module or software that can implement all or a part of functions of the terminal device. For example, the method may be performed by the terminal device. The method includes: When transmission of a first data set is completed, the terminal device sends fourth indication information, where the fourth indication information indicates that transmission of the first data set is completed.

In this embodiment of this application, the terminal device sends, to a network device, the fourth indication information indicating that transmission of the first data set is completed, so that the network device learns that transmission of the first data set has been completed. Further, the network device may adjust a scheduling policy based on the fourth indication information. Alternatively, for example, the network device may determine an end of the first data set.

In this embodiment of this application, that the terminal device sends the fourth indication information includes: When transmission of the first data set is completed, and there is a second data set, the terminal device sends the fourth indication information, where the first data set is transmitted before the second data set.

In this embodiment of this application, that transmission of the first data set is completed includes any one or more of the following: Sending of a first multiple access channel MAC protocol data unit PDU corresponding to a last piece of data corresponding to the first data set is completed; a first MAC PDU corresponding to a last piece of data corresponding to the first data set is delivered to a physical layer; or the terminal device includes, in a first MAC PDU, a last piece of data corresponding to the first data set.

In this embodiment of this application, that the terminal device sends the fourth indication information includes: sending the fourth indication information by using a physical uplink control channel PUCCH resource or a physical uplink shared channel PUSCH resource; or sending the fourth indication information by using a MAC control element CE, a packet data convergence protocol PDCP control PDU, or a radio link control RLC control PDU.

According to a fifth aspect, a communication apparatus is provided, to implement the foregoing methods. The communication apparatus may be the terminal device in the first aspect, the second aspect, the third aspect, or the fourth aspect, or an apparatus, for example, the chip, included in the terminal device.

The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible designs, the communication apparatus may include a processing module and a communication module. The communication module may include an output module (or a sending module) and an input module (or a receiving module), which are respectively configured to implement output (or sending) and input (or receiving) functions in any one of the foregoing aspects and any possible design thereof. The processing module may be configured to implement a processing function in any one of the foregoing aspects and any possible design thereof.

Optionally, the communication apparatus further includes a storage module, configured to store program instructions and data.

According to a sixth aspect, a communication apparatus is provided, and includes at least one processor. The processor is configured to run a computer program or instructions, or is configured to cause, through a logic circuit, the communication apparatus to perform the method according to any one of the foregoing aspects. The communication apparatus may be the terminal device in the first aspect, the second aspect, the third aspect, or the fourth aspect, or an apparatus, for example, the chip, included in the terminal device.

In some possible designs, the communication apparatus further includes a memory, configured to store computer instructions and/or a configuration file of the logic circuit. Optionally, the memory and the processor are integrated together, or the memory is independent of the processor.

In a possible design, the communication apparatus further includes a communication interface, configured to input and/or output a signal.

In some possible designs, the communication interface is an interface circuit, and is configured to read and write the computer instructions. For example, the interface circuit is configured to: receive computer-executable instructions (the computer-executable instructions are stored in the memory, and may be read from the memory directly or via another device), and transmit the computer-executable instructions to the processor.

In some possible designs, the communication interface is configured to communicate with a module outside the communication apparatus.

In some possible designs, the communication apparatus may be a chip system. When the communication apparatus is the chip system, the chip system may consist of a chip, or may include the chip and another discrete device.

According to a seventh aspect, a communication apparatus is provided, and includes a logic circuit and an interface circuit. The interface circuit is configured to input information and/or output information. The logic circuit is configured to: perform the method according to any one of the foregoing aspects, and perform processing and/or generate the output information based on the input information. The communication apparatus may be the terminal device in the first aspect, the second aspect, the third aspect, or the fourth aspect, or an apparatus, for example, the chip, included in the terminal device.

It may be understood that, when the communication apparatus according to any one of the fifth aspect to the seventh aspect is the chip, the foregoing sending action/function may be understood as outputting information, and the foregoing receiving action/function may be understood as inputting information.

According to an eighth aspect, a computer-readable storage medium is provided. The computer-readable storage medium stores a computer program or instructions. When the computer program or the instructions are executed by a processor, the method according to any one of the foregoing aspects is caused to be performed.

According to a ninth aspect, a computer program product is provided. When the computer program product is executed by a processor, the method according to any one of the foregoing aspects is caused to be performed.

According to a tenth aspect, a communication apparatus is provided. The communication apparatus includes modules/units configured to perform the methods according to the first aspect to the fourth aspect.

According to an eleventh aspect, a communication method is provided. The communication method includes the method according to the first aspect, the second aspect, the third aspect, or the fourth aspect.

According to a twelfth aspect, a communication system is provided. The communication system includes the terminal device according to the first aspect, the second aspect, the third aspect, or the fourth aspect. The terminal device may implement the communication apparatus according to any one of the fifth aspect to the seventh aspect.

For technical effects brought by any design manner in the fifth aspect to the twelfth aspect, refer to the technical effects brought by different design manners in the first aspect to the fourth aspect. Details are not described herein again.

### BRIEF DESCRIPTION OF DRAWINGS

FIG. 1 is a diagram of a possible protocol layer structure;
FIG. 2 is a diagram of another possible protocol layer structure;
FIG. 3 is a diagram of an architecture of a system according to an embodiment of this application;
FIG. 4A is a diagram of a structure of a communication device 400 according to an embodiment of this application;
FIG. 4B is a diagram of data sets according to an embodiment of this application;
FIG. 5 is a diagram of an example of a transmission method according to an embodiment of this application;
FIG. 5A is a diagram of another example of a transmission method according to an embodiment of this application;
FIG. 5B is a diagram of another example of a transmission method according to an embodiment of this application;
FIG. 6 is a diagram of sending first indication information by using picture transmission as an example;
FIG. 7 is a diagram of an example of a transmission method according to an embodiment of this application;
FIG. 7A is a diagram of an example of a transmission method according to an embodiment of this application;
FIG. 7B is a diagram of an example of a transmission method according to an embodiment of this application;
FIG. 8 is a diagram of sending second indication information when a third condition and a fourth condition are satisfied according to an embodiment of this application;
FIG. 9 is a diagram of remaining time corresponding to that transmission of a second data set is being performed when second indication information is sent when a third condition is satisfied according to an embodiment of this application;
FIG. 10 is a diagram of an example of a transmission method according to an embodiment of this application;
FIG. 10A is a diagram of an example of a transmission method according to an embodiment of this application;
FIG. 10B is a diagram of an example of a transmission method according to an embodiment of this application;
FIG. 11 is a diagram of an example of a transmission method according to an embodiment of this application;
FIG. 12 is a diagram of interaction between an APP layer of a terminal device and an AS layer of the terminal device according to an embodiment of this application; and
FIG. 13 is a diagram of a communication apparatus according to an embodiment of this application.

### DESCRIPTION OF EMBODIMENTS

In the descriptions of this application, unless otherwise specified, "/" indicates that associated objects are in an "or" relationship. For example, A/B may represent A or B. "And/or" in this application merely describes an association relationship between associated objects and indicates that three relationships may exist. For example, A and/or B may represent three cases: Only A exists, both A and B exist, and only B exists, where A and B may be singular or plural.

In the descriptions of this application, "a plurality of" means two or more than two unless otherwise specified. "At least one of the following" or a similar expression thereof indicates any combination of the items, and includes a singular item or any combination of plural items. For example, at least one of a, b, or c may indicate: a, b, c, a and b, a and c, b and c, or a, b, and c, where a, b, and c may be singular or plural.

In addition, to help clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the term like "example" or "for example" is for representing giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

It may be understood that an "embodiment" mentioned in the whole specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if' both mean that corresponding processing is performed in an objective case, are not intended to limit time, do not require a determining action during implementation, and do not mean other limitations.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in embodiments of this application may also correspondingly implement these features or functions. Details are not described herein.

In this application, unless otherwise specified, mutual reference may be made between same or similar parts of embodiments. In embodiments of this application, unless otherwise specified or there is a logic conflict, terms and/or descriptions in different embodiments are consistent and may be mutually referenced, and technical features in the different embodiments may be combined based on an internal logical relationship thereof, to form a new embodiment. The following implementations of this application do not limit the protection scope of this application.

In addition, the terms "include" and "have" and any variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, the conventional technology may change with evolution of the technical solutions, and the technical solutions provided in this application are not limited to the provided conventional technology.

It should be noted that different embodiments in embodiments of this application or some steps (for example, any one or more steps) in different embodiments may be combined with each other to form a new embodiment. It should be noted that, some steps or any one or more steps in different embodiments may include an optional step in an embodiment, may include a mandatory step in an embodiment, or may include an optional step and a mandatory step in an embodiment. This is not limited in this application.

It should be noted that, unless otherwise specified or there is a logic conflict, terms and/or descriptions in different embodiments are consistent and may be mutually referenced.

It should be noted that a sequence of the steps in embodiments of this application is not limited in this application.

It should be noted that a determining sequence of different conditions in embodiments of this application is not limited in this application.

It should be noted that "after" and "when" in embodiments of this application do not strictly limit a time point.

It should be noted that terms and the like in embodiments of this application are merely examples, or may have other names. This is not limited in this application.

For ease of understanding of technical solutions in embodiments of this application, technologies and terms related to this application are first briefly described.

### 1. Cloud-based photo enhancement principle

Generally, after a terminal device takes a photo locally, the terminal device performs image processing locally, to enhance picture quality. Common image post-processing technologies include denoising, super resolution, low-light enhancement, beautification, and the like. Some of the processing needs high computational power, local processing of the terminal device is limited by a processing capability of the terminal device, and it is quite difficult to improve processing quality that has reached a specific level. Cloud-based photo enhancement means uploading the photo to cloud for processing. A large quantity of graphical processing units (graphical processing units, GPUs) may be deployed on the cloud for image processing. In this way, processing quality can be better than that of local processing. This requires a user to upload the photo to the cloud after taking the photo. The cloud processes the photo, and then returns a processed photo to the terminal device. The terminal device displays the photo to the user.

For example, a characteristic of the photo in the cloud-based photo enhancement scenario is burst big data, and specific features are as follows:

A data amount of each photo is large, and it takes specific time to deliver data of one photo from an APP layer to an AS layer.

A photographing action is not periodic but bursty.

Optionally, for such cloud photographing, after the user taps a shutter button and before data is actually generated, the terminal device further needs to interact with a network device, to determine a maximum data amount and a maximum delay that can be ensured by the network device, so that the terminal device determines a photo format and generates photo data based on the maximum data amount. For example, a cloud-based photo enhancement service is used as an example, and a maximum data amount and a maximum delay therein may be a maximum data amount and a maximum delay that correspond to a photo uploading service exchanged between the terminal device and the network device. For example, the maximum delay herein indicates time for transmission of data of a service with the maximum data amount. For example, the maximum data amount herein may be a maximum value of a data amount corresponding to a data set.

For example, the maximum data amount may include/be replaced with any one or more of the following: a data amount, a maximum rate, or a rate.

For example, the maximum delay may include/be replaced with any one or more of the following: a delay, utmost time, maximum time, or time.

### 2. Structures of an application (application, APP) layer and an access stratum (access stratum, AS) layer

In embodiments of this application, communication between the network device and the terminal device complies with a specific protocol layer structure.

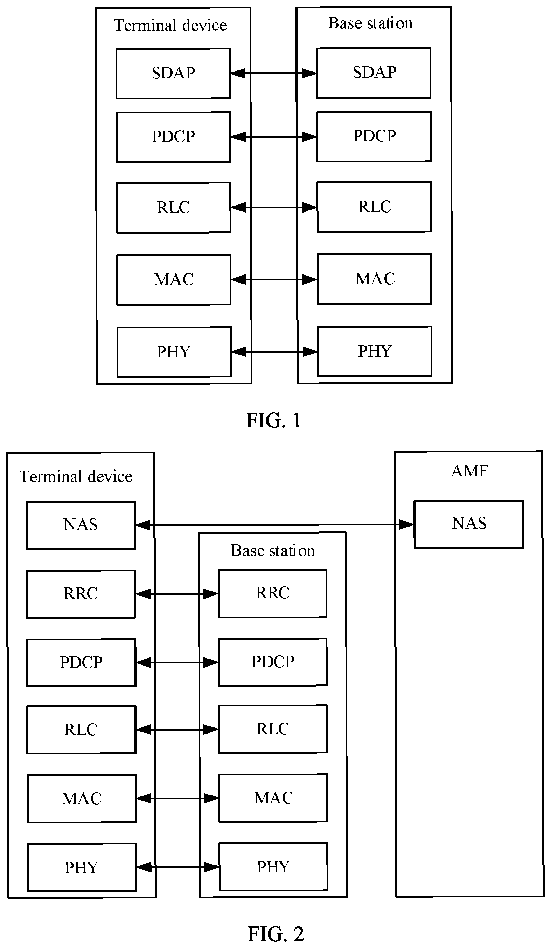

A possible protocol layer structure is shown in FIG. 1. For the AS layer, a user plane protocol stack may include a service data adaptation protocol (service data adaptation protocol, SDAP) layer, a packet data convergence protocol (packet data convergence protocol, PDCP) layer, a radio link control (radio link control, RLC) layer, a medium access control (medium access control, MAC) layer, and a physical (physical, PHY) layer.

Another possible protocol layer structure is shown in FIG. 2. For the AS layer, a control plane protocol stack may include a radio resource control (radio resource control, RRC) layer, a PDCP layer, an RLC layer, a MAC layer, and a PHY layer. In addition, the control plane protocol stack may further include a non-access stratum (non-access stratum, NAS).

In embodiments of this application, there may further be an APP layer above the AS layer. There may further be another layer between the AS layer and the APP layer. This is not limited in embodiments of this application.

### 3. Buffer status report (buffer status report, BSR)

### 3.1. BSR triggering

For example, for an existing BSR, the BSR is triggered if one or more of the following is generated for an active cell group (cell group):
(1) A MAC entity has new uplink (uplink, UL) data on a logical channel that belongs to a logical channel group (logical channel group, LCG), and one of the following two conditions is satisfied:
   A priority of the logical channel on which the new UL data is located is higher than a priority of any logical channel that includes available UL data and that is in any LCG; or no other logical channel in the LCG has available UL data.
(2) A UL resource is allocated, and a quantity of padding bits is greater than or equal to a size of a BSR MAC control element (CE) plus a subheader thereof. In this case, the BSR is referred to as a "padding BSR".
(3) A timer retxBSR-Timer expires, and at least one logical channel in an LCG includes UL data. In this case, the BSR is referred to as a "regular BSR".
(4) A periodicBSR-Timer expires. In this case, the BSR is referred to as a "periodic BSR".

### 3.2. BSR content

For example, the BSR includes a buffer size (buffer size) of a logical channel in an LCG, and the buffer size in the BSR includes an amount of data buffered at the PDCP layer and the RLC layer, and does not include a data amount of data that has not been delivered from the APP layer to the AS layer (or does not include a data amount of data at the APP layer).

It should be understood that the amount of the data buffered at the PDCP layer and the RLC layer may vary with data transmission.

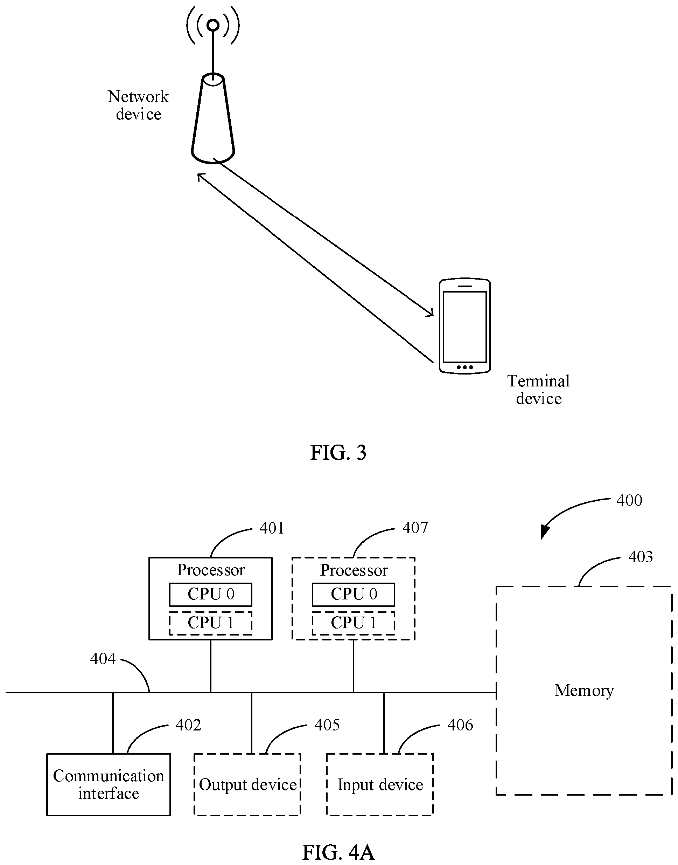

FIG. 3 is a diagram of an architecture of a system according to an embodiment of this application. As shown in FIG. 3, the communication system mainly includes a terminal device and a network device.

Optionally, embodiments of this application may be applied to 5G, may be applied to 5.5G, may be applied to a next generation radio access system (next generation radio access network, NG-RAN), or may be applied to a 6th generation (6th generation, 6G) mobile communication technology system, a 7th generation (7th generation, 7G) mobile communication technology system, or the like that may appear in the future. This is not specifically limited in embodiments of this application.

Optionally, the terminal device in this application may be user equipment (user equipment, UE), an access terminal, a terminal unit, a subscriber station, a terminal station, a mobile station, a remote station, a remote terminal, a user terminal (terminal equipment, TE), a mobile device, a wireless communication device, a terminal agent, a tablet computer (pad), a handheld device with a wireless communication function, a compute device or another processing device connected to a wireless modem, a vehicle-mounted device, a vehicle-mounted transceiver unit, a wearable device, or a terminal apparatus in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, an uncrewed aerial vehicle, a robot, a smart point of sale (point of sale, POS) terminal, customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in an internet of things (internet of things, IoT), for example, a terminal in V2X (for example, an internet of vehicles device), a terminal in D2D communication, or a terminal in M2M communication. The terminal may be mobile or fixed.

Optionally, the network device (which may also be referred to as an access network device) in this application may be a device configured to communicate with the terminal device, for example, may include an evolved NodeB (NodeB, eNB, or eNodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario; may include a next generation NodeB (next generation NodeB, gNB) in a new radio (new radio, NR) system; may include a transmission reception point (transmission reception point, TRP), a home base station (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like; or may include a base station in a non-terrestrial network (non-terrestrial network, NTN), that is, may be deployed on an aero platform or a satellite, where in the NTN, the network device or the access device may be used as a layer 1 (L1) relay (relay), may be used as a base station, or may be used as an integrated access and backhaul (integrated access and backhaul, IAB) node. Alternatively, the network device or the access device may be a device that implements functions of a base station in the IoT, for example, a device that implements the functions of the base station in uncrewed aerial vehicle communication, V2X, D2D, or machine to machine (machine to machine, M2M).

In some possible scenarios, the network device in embodiments of this application may alternatively be a module or a unit that can implement a part of functions of a base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, the network device may be a network device in an open radio access network (open RAN, ORAN) system or a module in the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of the software module and the hardware module.

Optionally, the base station in embodiments of this application may include various forms of base stations, for example, a macro base station, a micro base station (also referred to as a small cell), a relay station, an access point, a home base station, a TRP, a transmitting point (transmitting point, TP), or a mobile switching center. This is not specifically limited in embodiments of this application.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

Optionally, related functions of the terminal device or the network device in this application may be implemented by one device, may be jointly implemented by a plurality of devices, may be implemented by one or more functional modules in one device, may be implemented by one or more chips, or may be implemented by a system on chip (system on chip, SoC) or a chip system. The chip system may consist of a chip, or may include the chip and another discrete device. This is not specifically limited in embodiments of this application.

It may be understood that the foregoing function may be a network element in a hardware device, a software function running on dedicated hardware, a combination of hardware and software, or a virtualization function instantiated on a platform (for example, a cloud platform).

For example, the related functions of the terminal device and the network device in this application may be implemented by using a communication device 400 in FIG. 4A. FIG. 4A is a diagram of a structure of a communication device 400 according to an embodiment of this application. The communication device 400 includes one or more processors 401, a communication line 404, and at least one communication interface (a communication interface 402 and a processor 401 are merely used as an example in FIG. 4A for description), and optionally may further include a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 404 may include a path, and is configured to connect different components.

The communication interface 402 may be a transceiver module configured to communicate with another device or a communication network, for example, an Ethernet, a RAN, or a wireless local area network (wireless local area network, WLAN). For example, the transceiver module may be an apparatus like a transceiver. Optionally, the communication interface 402 may alternatively be a transceiver circuit located in the processor 401, and is configured to implement signal input and signal output of the processor.

The memory 403 may be an apparatus having a storage function. For example, the memory 403 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be for carrying or storing expected program code in a form of instructions or a data structure and that can be accessed by a computer, but is not limited thereto. The memory may exist independently, and is connected to the processor through the communication line 404. The memory may alternatively be integrated with the processor.

The memory 403 is configured to store computer-executable instructions for performing the solutions in this application, and the processor 401 controls execution. The processor 401 is configured to execute the computer-executable instructions stored in the memory 403, to implement a transmission method provided in embodiments of this application.

Alternatively, optionally, in embodiments of this application, the processor 401 may perform a processing-related function in a transmission method provided in the following embodiments of this application, and the communication interface 402 may be responsible for communicating with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the processor 401 may include one or more CPUs such as a CPU 0 and a CPU 1 in FIG. 4A.

During specific implementation, in an embodiment, the communication device 400 may include a plurality of processors such as the processor 401 and a processor 407 in FIG. 4A. Each of these processors may be a single-core (single-core) processor, or may be a multi-core (multi-core) processor. The processor herein may include but is not limited to at least one of the following: various compute devices that run software, such as a central processing unit (central processing unit, CPU), a microprocessor, a digital signal processor (DSP), a microcontroller unit (microcontroller unit, MCU), or an artificial intelligence processor. Each type of compute devices may include one or more cores for executing software instructions to perform an operation or processing.

During specific implementation, in an embodiment, the communication device 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensor device.

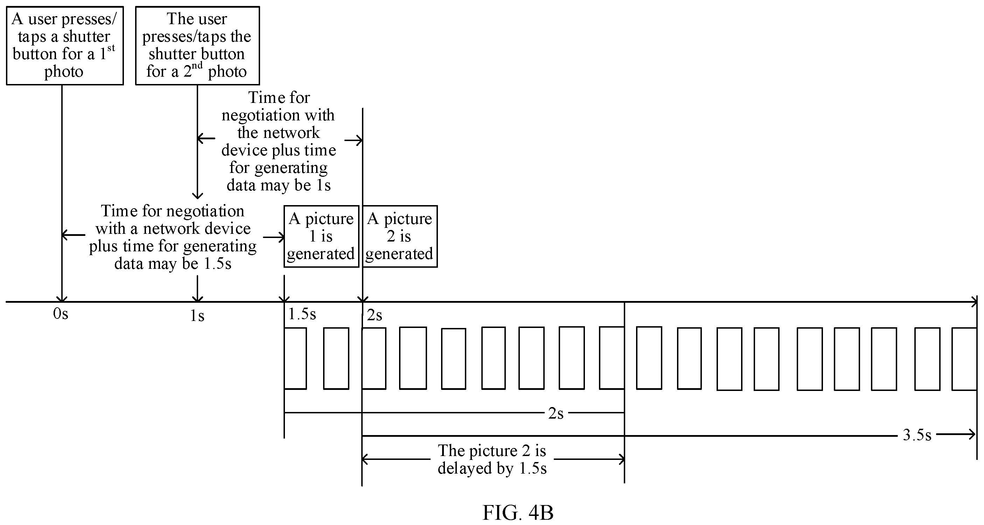

The communication device 400 may also be referred to as a communication apparatus sometimes, and may be a general-purpose device or a dedicated device. For example, the communication device 400 may be a desktop computer, a portable computer, a network server, a personal digital assistant (personal digital assistant, PDA), a mobile phone, a tablet computer, a wireless terminal device, an embedded device, the foregoing terminal, the foregoing network device, or a device having a structure similar to that in FIG. 4. A type of the communication device 400 is not limited in this embodiment of this application.

In addition, the composition structure shown in FIG. 4A does not constitute a limitation on the communication apparatus. In addition to the components shown in FIG. 4A, the communication apparatus may include more or fewer components than those shown in the figure, some components may be combined, or different component arrangements may be used.

For example, the terminal device interacts with the network device, to determine a maximum data amount and a maximum delay that can be ensured by the network device. For example, for a data set (for example, data of a photo) or one data set (for example, data of one photo), the terminal device interacts with the network device, to determine a maximum data amount and a maximum delay that can be ensured by the network device. For example, the terminal device may determine/generate the data set (for example, the photo or a photo format) based on the maximum data amount.

For example, the terminal device may further need specific time to generate data (for example, the data of the photo). If one data set (for example, data of one photo) is a 1^{st} data set (for example, data of a 1^{st} photo), according to a conventional technology, when there is new data, the terminal device triggers a BSR. In this way, the network device knows that the data starts, and may perform transmission based on the committed maximum data amount and maximum delay.

Problem 1: For example, as shown in FIG. 4B, if one data set (for example, data of one photo) is not a 1^{st} data set (for example, data of a 1^{st} photo), and an interval between the data set and a previous data set (for example, data of a previous photo) is less than a transmission time requirement (or a maximum delay) of the data set (for example, the data of the photo) or the previous data set (for example, the data of the previous photo), the data of the latter photo starts to be delivered only after the former data set (for example, the data of the former photo) is completely delivered by an APP layer to an AS layer. For the latter data set, the latter data set waits for a period of time at the APP layer. This increases a data transmission delay. Consequently, the maximum data amount and the maximum delay committed by the network device may not be satisfied.

Optionally, different photos correspond to a same logical channel (logical channel, LCH).

Problem 2: For example, the data set (for example, the photo or the photo format) determined by the terminal device is within a scope that can be ensured by the network device, but the network device may not know a specific data amount. If the data set (for example, data of the photo) is followed by another data set (for example, data of another photo), for example, an interval between the two data sets is less than a transmission time requirement (or a maximum delay) of one data set (for example, data of one photo) or a previous data set (for example, data of a previous photo), data in the two data sets is delivered from the APP layer to the AS layer back to back, and the network device does not know when the former data set ends. Consequently, the network device may fail to identify an end of the former data set or a start of the latter data set. For example, the network device may not know how to determine a scheduling policy thereof. For example, this may cause the network device to always perform scheduling according to a quite urgent requirement of the former data set until a maximum delay corresponding to the former data set is reached. For example, this may affect a network capacity.

It should be noted that, in embodiments of this application, an "indication" may include an explicit indication or an implicit indication. This is not limited in this application.

It should be noted that, in embodiments of this application, an APP layer of the terminal device may include/be replaced with a layer other than an AS layer of the terminal device, a NAS layer of the terminal device, or the like.

It should be noted that, in embodiments of this application, the method in this application is not only applicable to the terminal device and the network device, but also applicable to another device, for example, a first device and a second device.

It should be noted that, in embodiments of this application, the terminal device may be replaced with the first device.

It should be noted that, in embodiments of this application, the network device may be replaced with the second device.

It should be noted that, in embodiments of this application, the AS layer of the terminal device may be replaced with an AS layer of the first device.

It should be noted that, in embodiments of this application, the APP layer of the terminal device may be replaced with an APP layer of the first device.

It should be noted that, in embodiments of this application, a network device 1 or a core network device may be replaced with a third device.

It should be noted that, in embodiments of this application, a network device 2 or an access network device may be replaced with the second device or a fourth device.

It should be noted that, in embodiments of this application, having generated may be replaced with generating.

The following describes the transmission method provided in embodiments of this application with reference to the communication system shown in FIG. 3.

It should be noted that, in the following embodiments of this application, a name of a message between network elements, a name of each parameter, a name of each piece of information, or the like is merely an example, and may be another name in another embodiment. This is not specifically limited in the method provided in this application.

It may be understood that, in embodiments of this application, each network element may perform a part or all of the steps in embodiments of this application. These steps or operations are merely examples. In embodiments of this application, other operations or variations of various operations may further be performed. In addition, the steps may be performed in a sequence different from a sequence presented in embodiments of this application, and not all the operations in embodiments of this application may be necessarily performed.

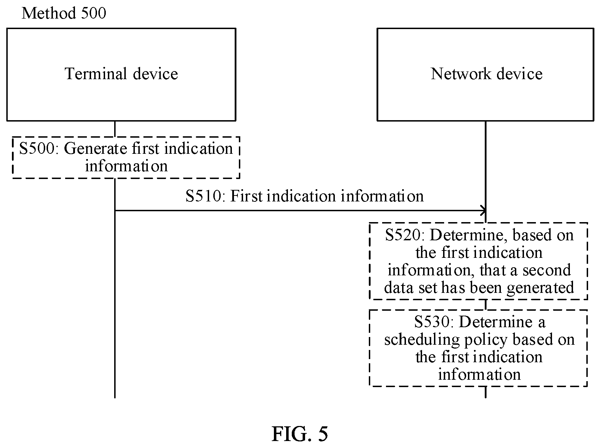

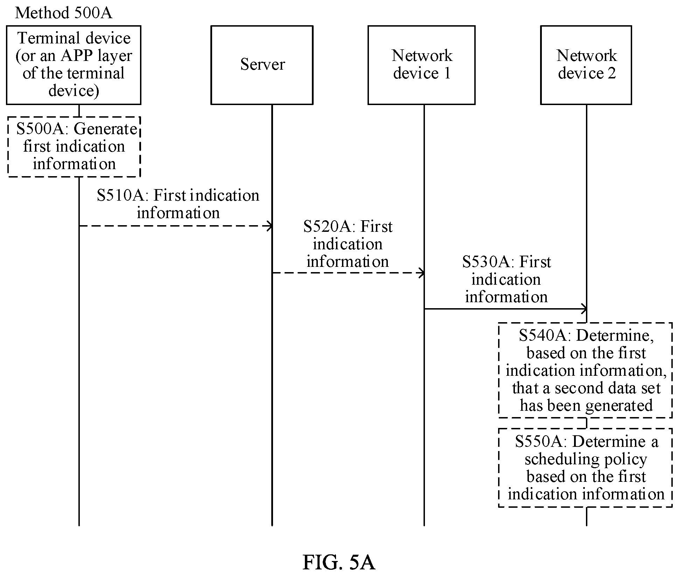

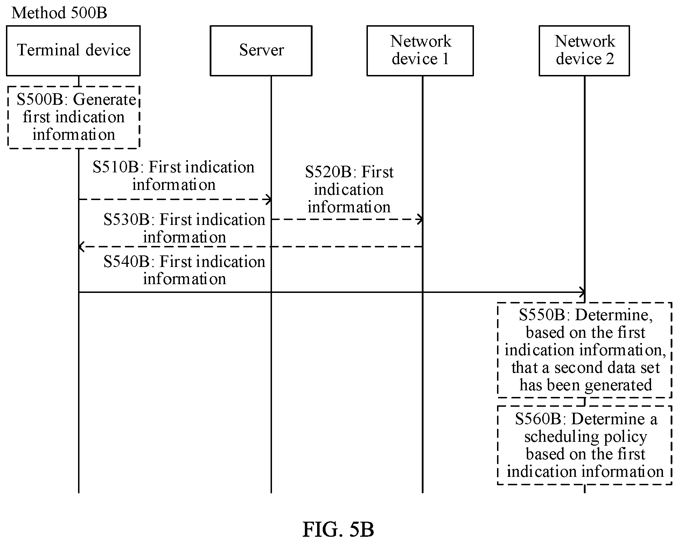

FIG. 5 is an example of a transmission method according to an embodiment of this application. The method is described by using interaction between a terminal device and a network device as an example. Certainly, an action of the terminal device in the method may alternatively be performed by an apparatus/a module in the terminal device, for example, a chip, a processor, or a processing unit in the terminal device. An action of the network device in the method may alternatively be performed by an apparatus/a module in the network device, for example, a chip, a processor, or a processing unit in the network device. This is not specifically limited in this embodiment of this application. For example, as shown in FIG. 5, the method 500 includes the following steps.

Optionally, S500: The terminal device generates first indication information.

For example, generating may include/be replaced with triggering. For example, generating the first indication information may include/be replaced with triggering sending of the first indication information.

Optionally, the terminal device generates the first indication information when a first condition is satisfied.

Optionally, the terminal device generates the first indication information when a first condition and a second condition are satisfied.

S510: The terminal device sends the first indication information to the network device. Accordingly, the network device receives the first indication information from the terminal device.

For example, the first indication information may indicate that a second data set has been generated. For example, the first indication information may include information indicating that the second data set has been generated. For example, the first indication information may include a specific value of one bit (bit). For example, the first indication information is "0", indicating that the second data set has been generated. How the first indication information indicates that the second data set has been generated is not specifically limited in this embodiment of this application.

For example, the first indication information may be sent by using a MAC CE, the first indication information may be sent by using a physical uplink control channel (physical uplink control channel, PUCCH) resource, the first indication information may be sent by using a physical uplink shared channel (physical uplink shared channel, PUSCH) resource, the first indication information may be sent by using an RRC message, the first indication information may be sent by using a PDCP control protocol data unit (protocol data unit, PDU), or the first indication information may be sent by using an RLC control PDU. This is not limited in this embodiment of this application.

Optionally, the terminal device sends the first indication information to the network device when the first condition is satisfied.

In a possible implementation, the first condition is that the second data set has been generated.

For example, that the terminal device sends the first indication information to the network device when the first condition is satisfied may be as follows: The terminal device sends the first indication information to the network device when the second data set has been generated.

In another possible implementation, the first condition is that the terminal device determines that the second data set has been generated.

For example, that the terminal device sends the first indication information to the network device when the first condition is satisfied may be as follows: The terminal device sends the first indication information to the network device when determining that the second data set has been generated.

Optionally, the terminal device sends the first indication information to the network device when the first condition and the second condition are satisfied.

In a possible implementation, the second condition is that an AS layer of the terminal device does not obtain the second data set.

For example, that the terminal device sends the first indication information to the network device when the first condition and the second condition are satisfied may be as follows: When the second data set has been generated, and the AS layer of the terminal device does not obtain the second data set, the terminal device sends the first indication information to the network device; or when the terminal device determines that the second data set has been generated, and the AS layer of the terminal device does not obtain the second data set, the terminal device sends the first indication information to the network device.

In another possible implementation, the second condition is that transmission of a first data set has not been completed.

For example, that the terminal device sends the first indication information to the network device when the first condition and the second condition are satisfied may be as follows: When the second data set has been generated, and transmission of the first data set has not been completed, the terminal device sends the first indication information to the network device; or when the terminal device determines that the second data set has been generated, and transmission of the first data set has not been completed, the terminal device sends the first indication information to the network device.

Optionally, the first data set is transmitted before the second data set.

Optionally, the first data set is generated before the second data set.

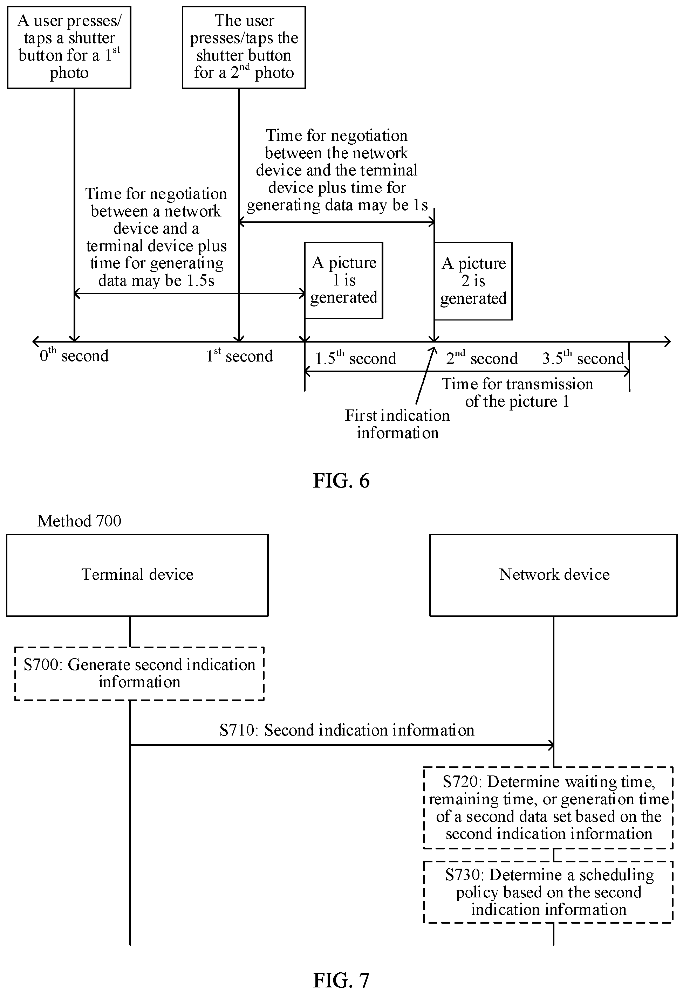

In this embodiment of this application, to enable a reader to more intuitively understand the transmission method provided in this embodiment of this application, a cloud-based photo enhancement service is used as an example to describe a case in which when the terminal device determines that the second data set has been generated, and transmission of the first data set has not been completed, the terminal device sends the first indication information to the network device and that is provided in this embodiment of this application. For example, FIG. 6 is a diagram of sending first indication information by using picture transmission as an example. As shown in FIG. 6, a picture 1 may be the first data set, and a picture 2 may be the second data set. When transmission of the picture 1 is not completed, the picture 2 is generated at a 2^{nd} second, and the terminal device may send the first indication information to the network device at or after the 2^{nd} second.

Optionally, the following provides two implementations of determining that the second data set has been generated as examples.

In a possible implementation, the AS layer of the terminal device determines, based on first information from an APP layer of the terminal device, that the second data set has been generated. In another possible implementation, the AS layer of the terminal device receives first information from an APP layer of the terminal device.

For example, the first information indicates that the second data set has been generated. For example, the first information includes information indicating that the second data set has been generated.

Optionally, the APP layer of the terminal device sends the first information to the AS layer of the terminal device when the first condition is satisfied; or the APP layer of the terminal device sends the first information to the AS layer of the terminal device when the first condition and the second condition are satisfied. This is not limited in this embodiment of this application.

Optionally, the AS layer of the terminal device receives the first information from the APP layer of the terminal device, and the AS layer of the terminal device has not received the second data set delivered by the APP layer of the terminal device, so that when the AS layer of the terminal device does not receive the second data set delivered by the APP layer of the terminal device, the AS layer of the terminal device can know in advance that the APP layer of the terminal device has generated the second data set. Alternatively, optionally, the AS layer of the terminal device receives the first information from the APP layer of the terminal device, and the AS layer of the terminal device receives the second data set delivered by the APP layer of the terminal device. This is not limited in this embodiment of this application.

In this embodiment of this application, the first information may be directly sent by the APP layer of the terminal device to the AS layer of the terminal device, or the first information may be sent by the APP layer of the terminal device to the AS layer of the terminal device via another layer and/or another device. This is not limited in this embodiment of this application.

In this embodiment of this application, the second data set may be directly delivered by the APP layer of the terminal device to the AS layer of the terminal device, or the second data set may be delivered by the APP layer of the terminal device to the AS layer of the terminal device via the another layer and/or the another device. This is not limited in this embodiment of this application.

Optionally, in this embodiment of this application, that the second data set has been generated may include/be replaced with the following: Partial data in the second data set has been generated; or all data in the second data set has been generated. This is not limited in this embodiment of this application.

Optionally, in this embodiment of this application, that transmission of the first data set has not been completed may include/be replaced with the following: One or more of a first LCH, a first PDCP entity, a first RLC entity, a first data radio bearer (data radio bearer, DRB), the AS layer of the terminal device, and the APP layer of the terminal device include data in the first data set. This is not limited in this embodiment of this application.

Optionally, in this embodiment of this application, the first data set is associated with one or more of the first LCH, the first PDCP entity, the first RLC entity, the first DRB, and a first quality of service (quality of service, QoS) flow.

For example, that the first data set is associated with the first LCH may be optionally that transmission of the first data set is performed through the first LCH, may be optionally that transmission of the first data set is to be performed through the first LCH, may be optionally that transmission of the first data set may be performed through the first LCH, or may be optionally that the first data set is mapped to the first LCH. For example, that the first data set is associated with the first PDCP entity may be optionally that transmission of the first data set is performed by using the first PDCP entity, may be optionally that transmission of the first data set is to be performed by using the first PDCP entity, may be optionally that transmission of the first data set may be performed by using the first PDCP entity, or may be optionally that the first data set is mapped to the first PDCP entity. For example, that the first data set is associated with the first RLC entity may be optionally that transmission of the first data set is performed by using the first RLC entity, may be optionally that transmission of the first data set is to be performed by using the first RLC entity, may be optionally that transmission of the first data set may be performed by using the first RLC entity, or may be optionally that the first data set is mapped to the first RLC entity. For example, that the first data set is associated with the first DRB may be optionally that transmission of the first data set is performed over the first DRB, may be optionally that transmission of the first data set is to be performed over the first DRB, may be optionally that transmission of the first data set may be performed over the first DRB, or may be optionally that the first data set is mapped to the first DRB. For example, that the first data set is associated with the first QoS flow may be optionally that transmission of the first data set is performed through the first QoS flow, may be optionally that transmission of the first data set is to be performed through the first QoS flow, may be optionally that transmission of the first data set may be performed through the first QoS flow, or may be optionally that the first data set is mapped to the first QoS flow. This is not limited in this application.

Optionally, in this embodiment of this application, the second data set is associated with one or more of the first LCH, the first PDCP entity, the first RLC entity, the first DRB, and the first QoS flow.

For example, for descriptions of that the second data set is associated with one or more of the first LCH, the first PDCP entity, the first RLC entity, the first DRB, and the first QoS flow, refer to the descriptions of that the first data set is associated with one or more of the first LCH, the first PDCP entity, the first RLC entity, the first DRB, and the first QoS flow. Details are not described herein again.

Optionally, in a possible implementation, in this embodiment of this application, the first indication information may include information about a data amount of the second data set. Optionally, the information about the data amount of the second data set may indicate that the second data set has been generated.

Optionally, the data amount of the second data set includes a data amount of data that is in the second data set and that the APP layer of the terminal device includes. For example, the data amount of the second data set includes the data amount of the data that is in the second data set and that the APP layer of the terminal device includes and a data amount of data that is in the second data set and that the AS layer of the terminal device includes.

Optionally, S520: The network device determines, based on the first indication information, that the second data set has been generated.

Optionally, S530: The network device determines a scheduling policy based on the first indication information.

In a possible implementation, the network device receives the first indication information, and may adjust the scheduling policy, or may adjust a data transmission rate. This is not limited in this application.

According to the transmission method provided in this embodiment of this application, the terminal device sends, to the network device, the first indication information indicating that the second data set has been generated, so that the network device learns that the second data set of the terminal device has been generated. Further, the network device may perform adjustment such as resource scheduling based on the first indication information, so that a data transmission delay requirement can be ensured, and user experience can be improved.

Further, optionally, the transmission method provided in this embodiment of this application further includes: The terminal device sends second indication information to the network device, where the second indication information may indicate waiting time or remaining time of the second data set, and the waiting time or the remaining time is determined based on generation time of the second data set. The second indication information is described in detail in the following method 700. Details are not described herein.

Further, optionally, the transmission method provided in this embodiment of this application further includes: The terminal device sends third indication information to the network device, where the third indication information indicates a data amount of a third data set. In this embodiment of this application, the third data set may be the first data set, or the third data set may be the second data set. The first data set is transmitted before the second data set, and the data amount of the third data set includes a data amount of data that is in the third data set and that the APP layer of the terminal device includes. The third indication information is described in detail in the following method 1000. Details are not described herein.

Further, optionally, the transmission method provided in this embodiment of this application further includes: The terminal device sends fourth indication information to the network device, where the fourth indication information indicates that sending of data in the first data set is completed, and the first data set is transmitted before the second data set. The fourth indication information is described in detail in the following method 1100. Details are not described herein. Optionally, when transmission of the first data set is completed, the terminal device sends the fourth indication information to the network device.

FIG. 5A is another example of a transmission method according to an embodiment of this application. The method is described by using interaction between a terminal device, a server, a network device 1, and a network device 2 as an example. Certainly, an action of the terminal device in the method may alternatively be performed by an apparatus/a module in the terminal device, for example, a chip, a processor, or a processing unit in the terminal device. An action of the network device 1 in the method may alternatively be performed by an apparatus/a module in the network device 1, for example, a chip, a processor, or a processing unit in the network device 1. An action of the network device 2 in the method may alternatively be performed by an apparatus/a module in the network device 2, for example, a chip, a processor, or a processing unit in the network device 2. An action of the server in the method may alternatively be performed by an apparatus/a module in the server, for example, a chip, a processor, or a processing unit in the server. This is not specifically limited in this embodiment of this application. For example, as shown in FIG. 5A, the method 500A includes the following steps.

Optionally, S500A: The terminal device (or an APP layer of the terminal device) generates first indication information.

Optionally, the terminal device generates the first indication information when a first condition is satisfied. For descriptions of the first condition and descriptions of the first indication information, refer to the descriptions in the method 500. Details are not described herein again.

Optionally, the terminal device generates the first indication information when a first condition and a second condition are satisfied. For descriptions of the second condition, refer to the descriptions in the method 500. Details are not described herein again.

Optionally, S510A: The terminal device (or the APP layer of the terminal device) sends the first indication information to the server. Accordingly, the server receives the first indication information from the terminal device (or the APP layer of the terminal device).

Optionally, the terminal device sends the first indication information to the server when the first condition is satisfied.

Optionally, the terminal device sends the first indication information to the server when the first condition and the second condition are satisfied.

Optionally, S520A: The server sends first indication information to the network device 1 (or a core network device). Accordingly, the network device 1 (or the core network device) receives the first indication information from the server.

S530A: The network device 1 (or the core network device) sends first indication information to the network device 2 (or an access network device). Accordingly, the network device 2 (or the access network device) receives the first indication information from the network device 1 (or the core network device).

Optionally, S540A: The network device 2 (or the access network device) determines, based on the first indication information, that a second data set has been generated.

Optionally, S550A: The network device 2 (or the access network device) determines a scheduling policy based on the first indication information.

It should be noted that the first indication information in any one or more of S500A (or S510A), S520A, and S530A is not necessarily completely the same. This is not limited in this application. The first indication information may be the same, or may be different.

According to the transmission method provided in this embodiment of this application, the network device learns that the second data set of the terminal device has been generated. Further, the network device may perform adjustment such as resource scheduling based on the first indication information, so that a data transmission delay requirement can be ensured, and user experience can be improved.

FIG. 5B is another example of a transmission method according to an embodiment of this application. The method is described by using interaction between a terminal device, a server, a network device 1, and a network device 2 as an example. Certainly, an action of the terminal device in the method may alternatively be performed by an apparatus/a module in the terminal device, for example, a chip, a processor, or a processing unit in the terminal device. An action of the network device 1 in the method may alternatively be performed by an apparatus/a module in the network device 1, for example, a chip, a processor, or a processing unit in the network device 1. An action of the network device 2 in the method may alternatively be performed by an apparatus/a module in the network device 2, for example, a chip, a processor, or a processing unit in the network device 2. An action of the server in the method may alternatively be performed by an apparatus/a module in the server, for example, a chip, a processor, or a processing unit in the server. This is not specifically limited in this embodiment of this application. For example, as shown in FIG. 5B, the method 500B includes the following steps.

Optionally, S500B: The terminal device (or an APP layer of the terminal device) generates first indication information.

Optionally, the terminal device generates the first indication information when a first condition is satisfied. For descriptions of the first condition and descriptions of the first indication information, refer to the descriptions in the method 500. Details are not described herein again.

Optionally, the terminal device generates the first indication information when a first condition and a second condition are satisfied. For descriptions of the second condition, refer to the descriptions in the method 500. Details are not described herein again.

Optionally, S510B: The terminal device (or the APP layer of the terminal device) sends the first indication information to the server. Accordingly, the server receives the first indication information from the terminal device (or the APP layer of the terminal device).

Optionally, the terminal device sends the first indication information to the server when the first condition is satisfied.

Optionally, the terminal device sends the first indication information to the server when the first condition and the second condition are satisfied.

Optionally, S520B: The server sends first indication information to the network device 1 (or a core network device). Accordingly, the network device 1 (or the core network device) receives the first indication information from the server.

Optionally, S530B: The network device 1 (or the core network device) sends first indication information to the terminal device (or a NAS layer of the terminal device). Accordingly, the terminal device (or the NAS layer of the terminal device) receives the first indication information from the network device 1 (or the core network device).

S540B: The terminal device (or an AS layer of the terminal device) sends first indication information to the network device 2 (or an access network device). Accordingly, the network device 2 (or the access network device) receives the first indication information from the terminal device (or the AS layer of the terminal device).

Optionally, S550B: The network device 2 (or the access network device) determines, based on the first indication information, that a second data set has been generated.

Optionally, S560B: The network device 2 (or the access network device) determines a scheduling policy based on the first indication information.

It should be noted that the first indication information in any one or more of S500B (or S510B), S520B, S530B, and S540B is not necessarily completely the same. This is not limited in this application. The first indication information may be the same, or may be different.

According to the transmission method provided in this embodiment of this application, the network device learns that the second data set of the terminal device has been generated. Further, the network device may perform adjustment such as resource scheduling based on the first indication information, so that a data transmission delay requirement can be ensured, and user experience can be improved.

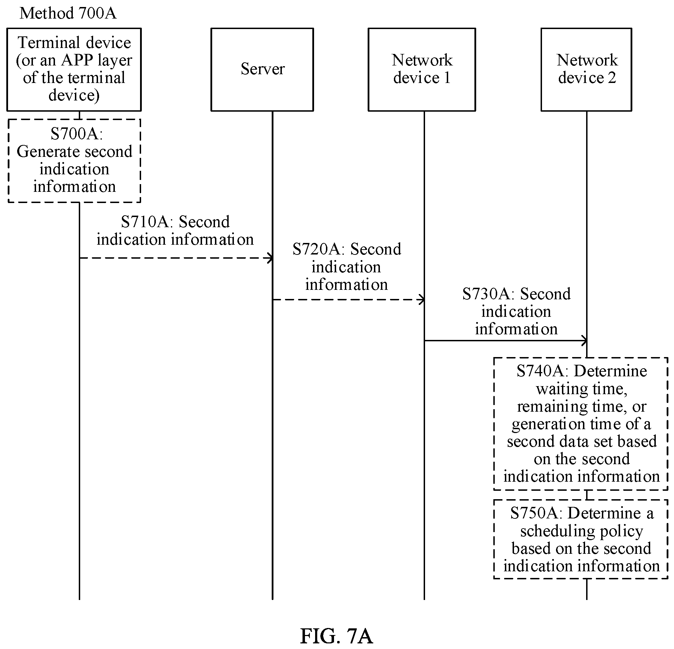

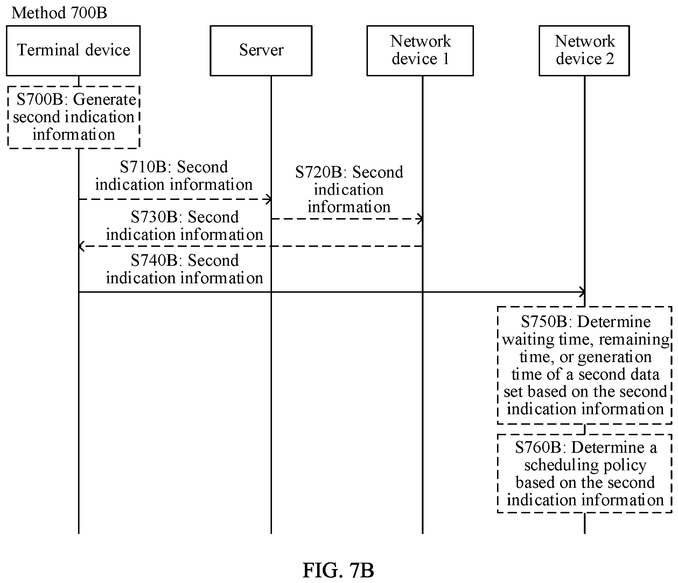

FIG. 7 is an example of a transmission method according to an embodiment of this application. The method is described by using interaction between a terminal device and a network device as an example. Certainly, an action of the terminal device in the method may alternatively be performed by an apparatus/a module in the terminal device, for example, a chip, a processor, or a processing unit in the terminal device. An action of the network device in the method may alternatively be performed by an apparatus/a module in the network device, for example, a chip, a processor, or a processing unit in the network device. This is not specifically limited in this embodiment of this application. For example, as shown in FIG. 7, the method 700 includes the following steps.

Optionally, S700: The terminal device generates second indication information.

For example, generating may include/be replaced with triggering. For example, generating the second indication information may include/be replaced with triggering sending of the second indication information.

Optionally, the terminal device generates the second indication information when a third condition is satisfied.

Optionally, the terminal device generates the second indication information when a third condition and a fourth condition are satisfied.

S710: The terminal device sends the second indication information to the network device.

Accordingly, the network device receives the second indication information from the terminal device.

For example, the second indication information may indicate waiting time, remaining time, or generation time of a second data set. For example, the second indication information may include information about the waiting time, the remaining time, or the generation time of the second data set.

For example, the waiting time or the remaining time of the second data set may be determined based on the generation time of the second data set.

Optionally, the terminal device sends the second indication information to the network device when the third condition is satisfied.

In a possible implementation, the third condition is that an AS layer of the terminal device obtains the second data set.

For example, that the terminal device sends the second indication information to the network device when the third condition is satisfied may be as follows: The terminal device sends the second indication information to the network device when the AS layer of the terminal device obtains the second data set.

For example, when transmission of the second data set is being performed, the terminal device sends, to the network device, information indicating the waiting time, the remaining time, or the generation time of the second data set. Optionally, the second indication information may be sent one or more times in a transmission process of the second data set. For example, each time the terminal device sends the second indication information to the network device, the network device may determine the waiting time, the remaining time, or the generation time of the second data set once. For example, the network device receives the second indication information, and may perform adjustment such as resource scheduling based on the second indication information. For example, a data transmission delay requirement can be ensured, and user experience can be improved.

Optionally, the terminal device sends the second indication information to the network device when the third condition and the fourth condition are satisfied.

In a possible implementation, the fourth condition is that transmission of a first data set has not been completed when the second data set is generated.

For example, that the terminal device sends the second indication information to the network device when the third condition and the fourth condition are satisfied may be as follows: When transmission of the first data set has not been completed when the second data set is generated, and an AS layer of the terminal device obtains the second data set, the terminal device sends the second indication information to the network device.

Optionally, the first data set is transmitted before the second data set. Optionally, the first data set is generated before the second data set.

For example, the terminal device sends the second indication information to the network device. Optionally, the second indication information may need to be sent only once.

For example, the network device receives the second indication information, and may perform adjustment such as resource scheduling based on the second indication information, to ensure a data transmission delay requirement of the second data set.

Optionally, the second indication information may be included in a BSR sent by the terminal device to the network device, or optionally, the second indication information may be included in a delay status report (delay status report, DSR) sent by the terminal device to the network device. This is not limited in this embodiment of this application. It should be understood that the terminal device may send the BSR or the DSR to the network device one or more times. This is not limited in this embodiment of this application.

For example, the second indication information may be sent by using a MAC CE, the second indication information may be sent by using a PUCCH resource, the second indication information may be sent by using a PUSCH resource, the second indication information may be sent by using an RRC message, the second indication information may be sent by using a PDCP control PDU, or the second indication information may be sent by using an RLC control PDU. This is not limited in this embodiment of this application.

Optionally, the generation time of the second data set may include/be replaced with generation time of partial data in the second data set or generation time of all data in the second data set. This is not limited in this embodiment of this application.

For example, the generation time of the partial data in the second data set may be generation time of an earliest batch of data or an earliest piece of data in the second data set. This is not limited in this application.

In a possible implementation, the waiting time may include/be: waiting time of the second data set before arrival at the AS layer of the terminal device; or waiting time of the second data set at an APP layer of the terminal device.

In a possible implementation, the waiting time may be determined based on the generation time of the second data set and first time.

In a possible implementation, that the waiting time may be determined based on the generation time of the second data set, and may include/be replaced with the following: The waiting time may be determined based on the generation time of the second data set and the first time.

In a possible implementation, the remaining time may be determined based on the generation time of the second data set and the first time.

In a possible implementation, that the remaining time may be determined based on the generation time of the second data set, and may include/be replaced with the following: The remaining time may be determined based on the generation time of the second data set and the first time.

Optionally, information about the waiting time of the second data set before arrival at the AS layer of the terminal device, information about the waiting time of the second data set at the APP layer of the terminal device, or the information about the generation time of the second data set may be included in second information sent by the APP layer of the terminal device to the AS layer of the terminal device or a header of data in the second data set.

For example, the second information may be included in the header of the data in the second data set.

For example, the header may include/be replaced with any one or more of the following: a general packet radio service (general packet radio service, GPRS) tunneling protocol for the user plane (GPRS tunneling Protocol for the user plane, GTP-U) header, a header of a NAS layer, or a header of a layer above the AS layer.

For example, optionally, the second information may include the information about the waiting time of the second data set at the APP layer of the terminal device. Optionally, the second information may include the information about the waiting time of the second data set before arrival at the AS layer of the terminal device. Optionally, the second information may include the information about the remaining time corresponding to the second data set. Optionally, the second information may include the information about the generation time of the second data set.

For example, the remaining time may be determined based on the generation time of the second data set and the first time. Optionally, the APP layer of the terminal device sends the second information to the AS layer of the terminal device when the third condition is satisfied.

Optionally, the APP layer of the terminal device sends the second information to the AS layer of the terminal device when the third condition and the fourth condition are satisfied.

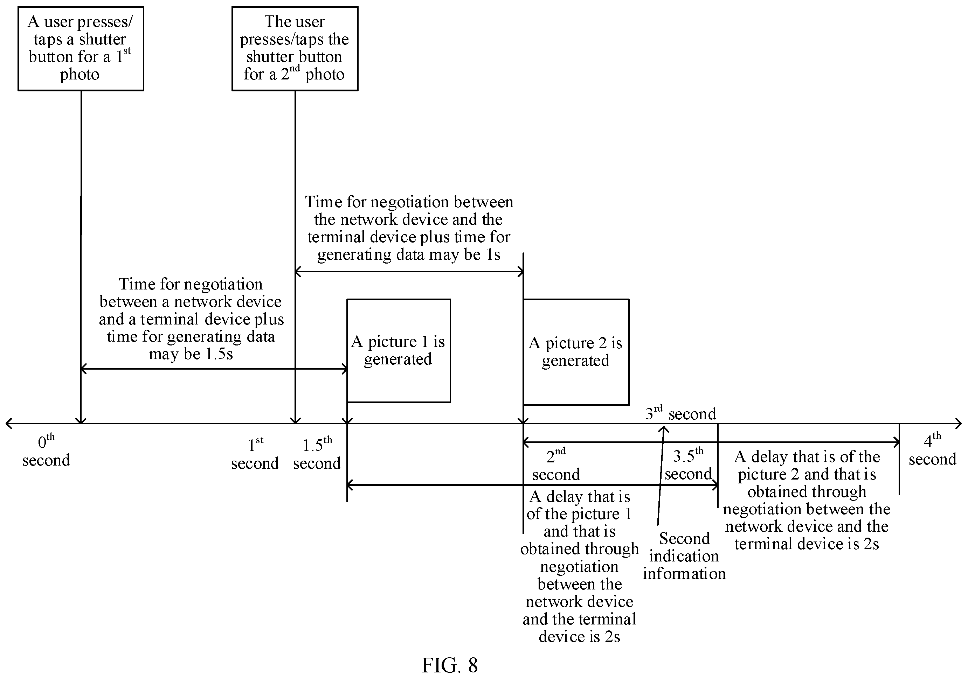

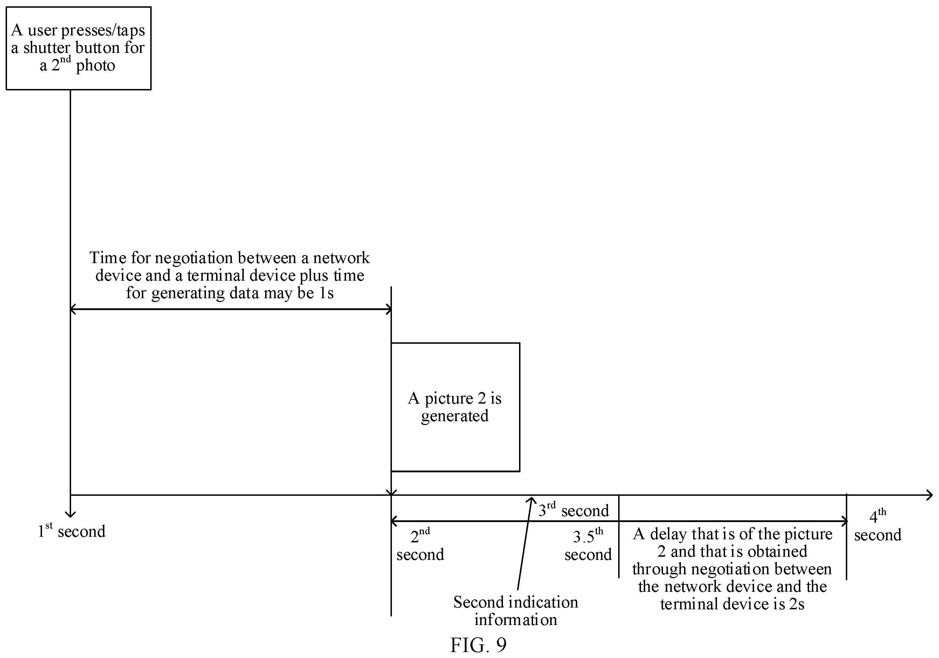

In this embodiment of this application, to enable a reader to more intuitively understand the transmission method provided in this embodiment of this application, a cloud-based photo enhancement service is used as an example to describe the remaining time in this embodiment of this application. FIG. 8 is a diagram of sending second indication information when a third condition and a fourth condition are satisfied according to an embodiment of this application. FIG. 9 is a diagram of remaining time corresponding to that transmission of a second data set is being performed when second indication information is sent when a third condition is satisfied according to an embodiment of this application. FIG. 9 shows only a scenario in which the second indication information is sent once. It should be understood that the second indication information may be sent a plurality of times. As shown in FIG. 8, a picture 1 may be the first data set, and a picture 2 may be the second data set. As shown in FIG. 9, a picture 2 may be the second data set. In the examples in FIG. 8 and FIG. 9, the picture 2 is generated at a 2^{nd} second, and that duration from generation of the second data set to completion of transmission of the second data set is 2s is used as an example for description. It should be understood that the duration from generation of the second data set to completion of transmission of the second data set may be a delay, namely, a maximum delay, that is of transmission of a maximum data amount of data and that is exchanged between the terminal device and the network device in descriptions in a related technology. Details are not described herein again.

Optionally, the first time may be time at which the terminal device sends the second indication information. For example, when the generation time of the second data set is the 2^{nd} second, and the time at which the terminal device sends the second indication information is a 3^{rd} second, the remaining time may be: Maximum delay (for example, 2s) - (Difference (for example, 1s) between the generation time of the second data set and the time at which the terminal device sends the second indication information) = 1s.

Optionally, the first time may be time (not shown in FIG. 8 and FIG. 9) at which the terminal device generates the second indication information. For example, when the generation time of the second data set is the 2^{nd} second, and the time at which the terminal device generates the second indication information is a 2.5^{th} second (FIG. 8 and FIG. 9 show that sending time of the second indication information is a 3^{rd} second, and the generation time of the second indication information is 0.5s earlier than the sending time of the second indication information), the remaining time may be: Maximum delay (for example, 2s) - (Difference (for example, 0.5s) between the generation time of the second data set and the time at which the terminal device generates the second indication information) = 1.5s.

Optionally, the first time may be time (not shown in FIG. 8 and FIG. 9) at which the terminal device determines the second indication information. For example, when the generation time of the second data set is the 2^{nd} second, and the time at which the terminal device determines the second indication information is a 2.4^{th} second (FIG. 8 and FIG. 9 show that sending time of the second indication information is a 3^{rd} second, and the determining time of the second indication information is 0.6s earlier than the sending time of the second indication information), the remaining time may be: Maximum delay (for example, 2s) - (Difference (for example, 0.4s) between the generation time of the second data set and the time at which the terminal device determines the second indication information) = 1.6s.

Optionally, the first time may be time separated from time at which the terminal device sends the second indication information by first duration. For example, the first time is after or before the time at which the terminal device sends the second indication information. For example, when the generation time of the second data set is the 2^{nd} second, the time at which the terminal device sends the second indication information is a 3^{rd} second, and the first duration is 0.5s (that is, 0.5s after the terminal device sends the second indication information), the remaining time may be 0.5s.

Optionally, the first time may be time separated from time at which the terminal device generates the second indication information by second duration. For example, the first time is after or before the time at which the terminal device generates the second indication information. For example, when the generation time of the second data set is the 2^{nd} second, the time at which the terminal device generates the second indication information is a 2.5^{th} second, and the second duration is 0.4s (that is, 0.4s after the terminal generates the second indication information), the remaining time may be 1.1s.

Optionally, the first time may be time separated from time at which the terminal device determines the second indication information by third duration. For example, the first time is after or before the time at which the terminal device determines the second indication information. For example, when the generation time of the second data set is the 2^{nd} second, the time at which the terminal device determines the second indication information is a 2.4^{th} second, the third duration is 0.6s (that is, 0.6s after the terminal device determines the second indication information), the remaining time may be 1s.

The foregoing is merely several examples of the remaining time. All other solutions that can be for determining the remaining time should fall within the protection scope of this embodiment of this application. This is not limited in this embodiment of this application.

Optionally, in this embodiment of this application, that transmission of the first data set has not been completed may include/be replaced with the following: One or more of a first LCH, a first PDCP entity, a first RLC entity, a first DRB, the AS layer of the terminal device, and the APP layer of the terminal device include data in the first data set. This is not limited in this application.

Optionally, in this embodiment of this application, the first data set is associated with one or more of the first LCH, the first PDCP entity, the first RLC entity, the first DRB, and a first QoS flow.

Optionally, in this embodiment of this application, the second data set is associated with one or more of the first LCH, the first PDCP entity, the first RLC entity, the first DRB, and the first QoS flow.

For example, for descriptions of that the first data set or the second data set is associated with one or more of the first LCH, the first PDCP entity, the first RLC entity, the first DRB, and the first QoS flow, refer to the related descriptions in the method 500. Details are not described herein again.

Optionally, in a possible implementation, the second indication information may further include information about a data amount of the second data set.

Optionally, the data amount of the second data set includes a data amount of data that is in the second data set and that the APP layer of the terminal device includes. For example, the data amount of the second data set includes the data amount of the data that is in the second data set and that the APP layer of the terminal device includes and a data amount of data that is in the second data set and that the AS layer of the terminal device includes.

Optionally, S720: The network device determines the waiting time, the remaining time, or the generation time of the second data set based on the second indication information.

Optionally, S730: The network device determines a scheduling policy based on the second indication information.

In a possible implementation, the network device receives the second indication information, and may adjust the scheduling policy, or may adjust a data transmission rate. This is not limited in this application.

According to the transmission method provided in this embodiment of this application, the terminal device sends, to the network device, the second indication information indicating the waiting time or the remaining time of the second data set, so that the network device learns of the waiting time, the remaining time, or the generation time of the second data set. Further, the network device may perform adjustment such as resource scheduling based on the second indication information, for example, perform transmission of the data in the second data set at a higher rate, to ensure the data transmission delay requirement of the second data set. Alternatively, for example, the network device may determine an end of the second data set.

Further, optionally, the transmission method provided in this embodiment of this application may further include: The terminal device sends first indication information to the network device, where the first indication information may indicate that the second data set has been generated. For descriptions of the first indication information, refer to the related descriptions in the method 500. Details are not described herein again.

Further, optionally, the transmission method provided in this embodiment of this application further includes: The terminal device sends third indication information to the network device, where the third indication information may indicate a data amount of a third data set. In this embodiment of this application, the third data set may be the first data set, or the third data set may be the second data set. The first data set is transmitted before the second data set, and the data amount of the third data set includes a data amount of data that is in the third data set and that the APP layer of the terminal device includes. The third indication information is described in detail in the following method 1000. Details are not described herein.

Further, optionally, the transmission method provided in this embodiment of this application further includes: The terminal device sends fourth indication information to the network device, where the fourth indication information may indicate that sending of data in the first data set is completed, and the first data set is transmitted before the second data set. The fourth indication information is described in detail in the following method 1100. Details are not described herein. Optionally, when transmission of the first data set is completed, the terminal device sends the fourth indication information to the network device.

FIG. 7A is an example of a transmission method according to an embodiment of this application. The method is described by using interaction between a terminal device, a server, a network device 1, and a network device 2 as an example. Certainly, an action of the terminal device in the method may alternatively be performed by an apparatus/a module in the terminal device, for example, a chip, a processor, or a processing unit in the terminal device. An action of the network device 1 in the method may alternatively be performed by an apparatus/a module in the network device 1, for example, a chip, a processor, or a processing unit in the network device 1. An action of the network device 2 in the method may alternatively be performed by an apparatus/a module in the network device 2, for example, a chip, a processor, or a processing unit in the network device 2. An action of the server in the method may alternatively be performed by an apparatus/a module in the server, for example, a chip, a processor, or a processing unit in the server. This is not specifically limited in this embodiment of this application. For example, as shown in FIG. 7A, the method 700A includes the following steps.

Optionally, S700A: The terminal device (or an APP layer of the terminal device) generates second indication information.

Optionally, the terminal device generates the second indication information when a third condition is satisfied. For descriptions of the third condition and third indication information, refer to the descriptions in the method 700. Details are not described herein again.

Optionally, the terminal device generates the second indication information when a third condition and a fourth condition are satisfied. For descriptions of the fourth condition, refer to the descriptions in the method 700. Details are not described herein again.

Optionally, S710A: The terminal device (or the APP layer of the terminal device) sends the second indication information to the server.

Optionally, the terminal device sends the second indication information to the server when the third condition is satisfied.

Optionally, the terminal device sends the second indication information to the server when the third condition and the fourth condition are satisfied.

Optionally, S720A: The server sends second indication information to the network device 1 (or a core network).

S730A: The network device 1 (or the core network) sends second indication information to the network device 2 (or an access network device).

Optionally, S740A: The network device 2 (or the access network device) determines waiting time, remaining time, or generation time of a second data set based on the second indication information.

Optionally, S750A: The network device 2 (or the access network device) determines a scheduling policy based on the second indication information.

It should be noted that the second indication information in any one or more of S700A (or S710A), S720A, and S730A is not necessarily the same. This is not limited in this application. The second indication information may be the same, or may be different.

According to the transmission method provided in this embodiment of this application, the network device learns of the waiting time, the remaining time, or the generation time of the second data set. Further, the network device may perform adjustment such as resource scheduling based on the second indication information, for example, perform transmission of data in the second data set at a higher rate, to ensure a data transmission delay requirement of the second data set. Alternatively, for example, the network device may determine an end of the second data set.

FIG. 7B is an example of a transmission method according to an embodiment of this application. The method is described by using interaction between a terminal device, a server, a network device 1, and a network device 2 as an example. Certainly, an action of the terminal device in the method may alternatively be performed by an apparatus/a module in the terminal device, for example, a chip, a processor, or a processing unit in the terminal device. An action of the network device 1 in the method may alternatively be performed by an apparatus/a module in the network device 1, for example, a chip, a processor, or a processing unit in the network device 1. An action of the network device 2 in the method may alternatively be performed by an apparatus/a module in the network device 2, for example, a chip, a processor, or a processing unit in the network device 2. An action of the server in the method may alternatively be performed by an apparatus/a module in the server, for example, a chip, a processor, or a processing unit in the server. This is not specifically limited in this embodiment of this application. For example, as shown in FIG. 7B, the method 700B includes the following steps.

Optionally, S700B: The terminal device (or an APP layer of the terminal device) generates second indication information.

Optionally, the terminal device generates the second indication information when a third condition is satisfied.

Optionally, the terminal device generates the second indication information when a third condition and a fourth condition are satisfied.

Optionally, S710B: The terminal device (or the APP layer of the terminal device) sends the second indication information to the server.

Optionally, the terminal device sends the second indication information to the server when the third condition is satisfied.

Optionally, the terminal device sends the second indication information to the server when the third condition and the fourth condition are satisfied.

Optionally, S720B: The server sends second indication information to the network device 1 (or a core network).

Optionally, S730B: The network device 1 (or the core network) sends second indication information to the terminal device (or a NAS layer of the terminal device).

S740B: The terminal device (or an AS layer of the terminal device) sends second indication information to the network device 2 (or an access network device).

Optionally, S750B: The network device 2 (or the access network device) determines waiting time, remaining time, or generation time of a second data set based on the second indication information.

Optionally, S760B: The network device 2 (or the access network device) determines a scheduling policy based on the second indication information.

It should be noted that the second indication information in any one or more of S700B (or S710B), S720B, S730B, and S740B is not necessarily the same. This is not limited in this application. The second indication information may be the same, or may be different.

According to the transmission method provided in this embodiment of this application, the network device learns of the waiting time, the remaining time, or the generation time of the second data set. Further, the network device may perform adjustment such as resource scheduling based on the second indication information, for example, perform transmission of data in the second data set at a higher rate, to ensure a data transmission delay requirement of the second data set. Alternatively, for example, the network device may determine an end of the second data set.

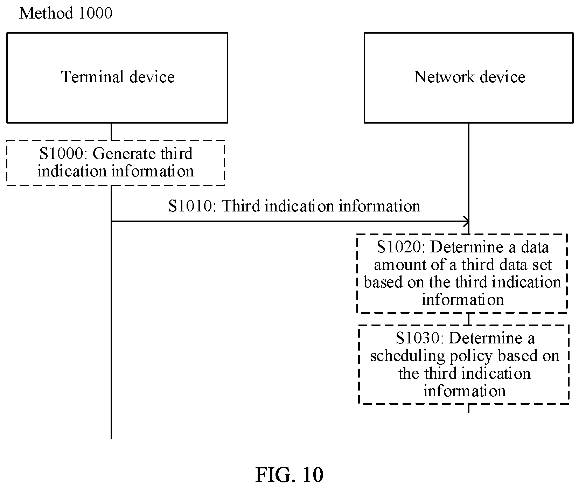

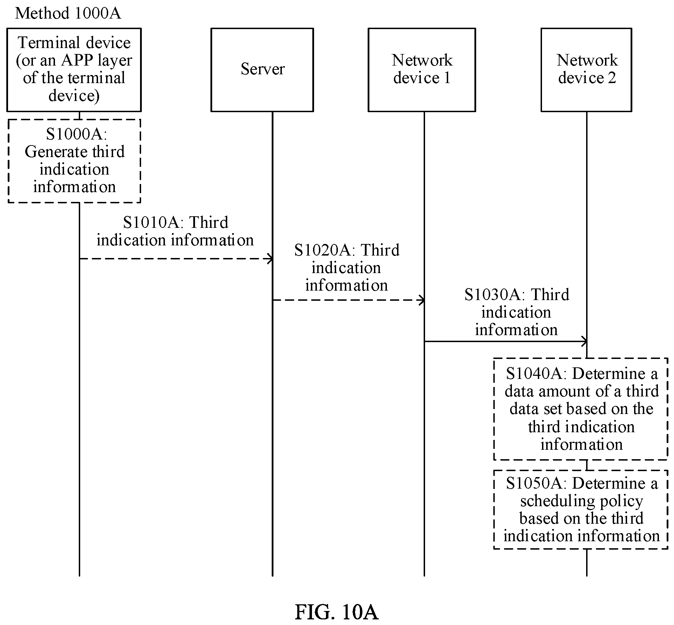

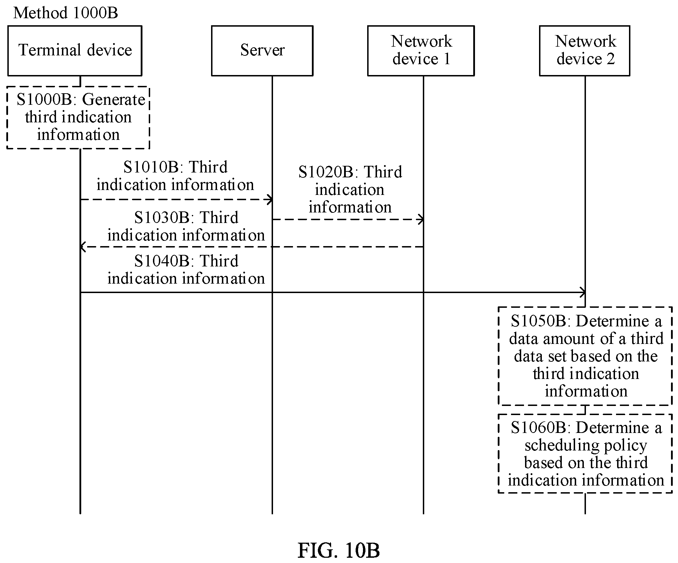

FIG. 10 is an example of a transmission method according to an embodiment of this application. The method is described by using interaction between a terminal device and a network device as an example. Certainly, an action of the terminal device in the method may alternatively be performed by an apparatus/a module in the terminal device, for example, a chip, a processor, or a processing unit in the terminal device. An action of the network device in the method may alternatively be performed by an apparatus/a module in the network device, for example, a chip, a processor, or a processing unit in the network device. This is not specifically limited in this embodiment of this application. For example, as shown in FIG. 10, the method 1000 includes the following steps.

Optionally, S1000: The terminal device generates third indication information.

For example, generating may include/be replaced with triggering. For example, generating the third indication information may include/be replaced with triggering sending of the third indication information.

Optionally, when a third data set has been generated, if a third data set has been generated, when the terminal device determines that a third data set has been generated, or if the terminal device determines that a third data set has been generated, the terminal device generates the third indication information.

S1010: The terminal device sends the third indication information to the network device.

Accordingly, the network device receives the third indication information from the terminal device.

For example, the third indication information may indicate a data amount of the third data set. For example, the third indication information may include information about the data amount of the third data set.

Optionally, the data amount of the third data set may include a data amount of data that is in the third data set and that an APP layer of the terminal device includes.

Optionally, the APP layer of the terminal device may send third information to an AS layer of the terminal device.

For example, the third information may be included in a header of data in the third data set.

For example, the header may include/be replaced with any one or more of the following: a GTP-U header, a header of a NAS layer, or a header of a layer above the AS layer.

For example, the third information may indicate the data amount of the data that is in the third data set and that the APP layer of the terminal device includes or the data amount of the third data set.

Optionally, when the third data set has been generated, if the third data set has been generated, when the terminal device determines that the third data set has been generated, or if the terminal device determines that the third data set has been generated, the APP layer of the terminal device may send the third information to the AS layer of the terminal device.

Optionally, the data amount of the third data set may include the data amount of the data that is in the third data set and that the APP layer of the terminal device includes and a data amount of data that is in the third data set and that the AS layer of the terminal device includes.

Optionally, the data amount of the third data set may be determined based on the data amount of the data that is in the third data set and that the APP layer of the terminal device includes. For example, the data amount of the third data set may be determined based on the data amount of the data that is in the third data set and that the APP layer of the terminal device includes and the data amount of the data that is in the third data set and that the AS layer of the terminal device includes.

Optionally, the data amount of the third data set may be determined based on the data amount of the data that is in the third data set and that the APP layer of the terminal device includes and a factor 1. For example, the data amount of the third data set may be determined based on the data amount of the data that is in the third data set and that the APP layer of the terminal device includes, the data amount of the data that is in the third data set and that the AS layer of the terminal device includes, and the factor 1.

For example, in consideration of header overheads, the terminal device may determine the data amount of the third data set based on the data amount of the data that is in the third data set and that the APP layer of the terminal device includes (or the data amount of the data that is in the third data set and that the APP layer of the terminal device includes and the data amount of the data that is in the third data set and that the AS layer of the terminal device includes) and the factor 1.

For example, the data amount of the third data set may be the data amount of the data that is in the third data set and that the APP layer of the terminal device includes (or a sum of the data amount of the data that is in the third data set and that the APP layer of the terminal device includes and the data amount of the data that is in the third data set and that the AS layer of the terminal device includes) multiplied by the factor 1.

For example, the header may include any one or more of the following: a MAC subheader, an RLC header, a PDCP header, or a header of the APP layer.

For example, the factor 1 may be predefined in a protocol, may be preconfigured in the terminal device, may be indicated by the network device to the terminal device, or may be determined by the terminal device. This is not limited.

For example, the factor 1 may include/be replaced with a parameter 1.

**In** this embodiment of this application, different from the data amount in the BSR or the DSR described in the foregoing related technology, the data amount of the third data set includes the data amount of the data that is in the third data set and that the APP layer of the terminal device includes. For example, after the third data set is generated, the terminal device may need to send the third indication information to the network device only once. However, in the foregoing related technology, the terminal device needs to report data amount information to the network device a plurality of times, and the data amount information is reported via the BSR or the DSR.

Optionally, the third indication information may be included in a BSR sent by the terminal device to the network device, or optionally, the third indication information may be included in a DSR sent by the terminal device to the network device. This is not limited in this embodiment of this application.

Optionally, the third indication information may be sent by using a MAC CE, the third indication information may be sent by using a PUCCH resource, the third indication information may be sent by using a PUSCH resource, the third indication information may be sent by using an RRC message, the third indication information may be sent by using a PDCP control PDU, or the third indication information may be sent by using an RLC control PDU. This is not limited in this embodiment of this application.

Optionally, when the third data set has been generated, or if the third data set has been generated, the terminal device sends the third indication information to the network device.

Optionally, when the terminal device determines that the third data set has been generated, or if the terminal device determines that the third data set has been generated, the terminal device sends the third indication information to the network device.

For example, the third data set may be the first data set or the second data set described in the method 500 or the method 700. For the first data set and the second data set, refer to the related descriptions in the method 500 and the method 700. Details are not described herein again.

Optionally, that the third data set has been generated may include/be replaced with the following: Partial data in the third data set has been generated; or all data in the third data set has been generated. This is not limited in this application.

Optionally, the following provides two implementations of determining that the third data set has been generated as examples.

In a possible implementation, the AS layer of the terminal device determines, based on the third information from the APP layer of the terminal device, that the third data set has been generated.

In another possible implementation, the AS layer of the terminal device receives the third information from the APP layer of the terminal device.

In this embodiment of this application, for related content of that the third information and the third data set are delivered from the APP layer of the terminal device to the AS layer of the terminal device, refer to the related descriptions of the related content of that the first information and the second data set are delivered from the APP layer of the terminal device to the AS layer of the terminal device in the method 500. Details are not described herein again.

Optionally, S1020: The network device determines the data amount of the third data set based on the third indication information.

Optionally, S1030: The network device determines a scheduling policy based on the third indication information.

In this embodiment of this application, the terminal device sends, to the network device, the third indication information indicating the data amount of the third data set, so that the network device learns of the data amount of the third data set. Further, the network device may perform adjustment such as resource scheduling based on the third indication information, to ensure a data transmission delay requirement. Alternatively, for example, the network device may determine an end of the third data set.

Further, optionally, the transmission method provided in this embodiment of this application further includes: The terminal device sends first indication information to the network device, where the first indication information may indicate that the third data set has been generated. It should be understood that, for example, the third data set may be the first data set or the second data set described in the method 500 or the method 700. For descriptions of the first indication information, refer to the related descriptions in the method 500. Details are not described herein again.

Further, optionally, the transmission method provided in this embodiment of this application further includes: The terminal device sends second indication information to the network device, where the second indication information may indicate waiting time or remaining time of the third data set, and the waiting time or the remaining time is determined based on generation time of the third data set. It should be understood that, for example, the third data set may be the first data set or the second data set described in the method 500 or the method 700. For descriptions of the second indication information, refer to the related descriptions in the method 700. Details are not described herein again.

Further, optionally, the transmission method provided in this embodiment of this application further includes: The terminal device sends fourth indication information to the network device, where the fourth indication information may indicate that sending of data in the first data set is completed. The fourth indication information is described in detail in the following method 1100. Details are not described herein. Optionally, when transmission of the first data set is completed, the terminal device sends the fourth indication information to the network device.

FIG. 10A is an example of a transmission method according to an embodiment of this application. The method is described by using interaction between a terminal device, a server, a network device 1, and a network device 2 as an example. Certainly, an action of the terminal device in the method may alternatively be performed by an apparatus/a module in the terminal device, for example, a chip, a processor, or a processing unit in the terminal device. An action of the network device 1 in the method may alternatively be performed by an apparatus/a module in the network device 1, for example, a chip, a processor, or a processing unit in the network device 1. An action of the network device 2 in the method may alternatively be performed by an apparatus/a module in the network device 2, for example, a chip, a processor, or a processing unit in the network device 2. An action of the server in the method may alternatively be performed by an apparatus/a module in the server, for example, a chip, a processor, or a processing unit in the server. This is not specifically limited in this embodiment of this application. For example, as shown in FIG. 10A, the method 1000A includes the following steps.

Optionally, S1000A: The terminal device (or an APP layer of the terminal device) generates third indication information.

Optionally, when a third data set has been generated, if a third data set has been generated, when the terminal device determines that a third data set has been generated, or if the terminal device determines that a third data set has been generated, the terminal device generates the third indication information. For descriptions of the third indication information, refer to the descriptions in the method 1000. Details are not described herein again.

Optionally, S1010A: The terminal device (or the APP layer of the terminal device) sends the third indication information to the server. Accordingly, the server receives the third indication information from the terminal device (or the APP layer of the terminal device).

Optionally, when the third data set has been generated, if the third data set has been generated, when the terminal device determines that the third data set has been generated, or if the terminal device determines that the third data set has been generated, the terminal device sends the third indication information to the server.

Optionally, S1020A: The server sends third indication information to the network device 1 (or a core network device). Accordingly, the network device 1 (or the core network device) receives the third indication information from the server.

S1030A: The network device 1 (or the core network device) sends third indication information to the network device 2 (or an access network device). Accordingly, the network device 2 (or the access network device) receives the third indication information from the network device 1 (or the core network device).

Optionally, S1040A: The network device 2 (or the access network device) determines a data amount of the third data set based on the third indication information.

Optionally, S1050A: The network device 2 (or the access network device) determines a scheduling policy based on the third indication information.

It should be noted that the third indication information in any one or more of S1000A (or S1010A), S1020A, and S1030A is not necessarily the same. This is not limited in this application. The third indication information may be the same, or may be different.

In this embodiment of this application, the network device learns of the data amount of the third data set. Further, the network device may perform adjustment such as resource scheduling based on the third indication information, to ensure a data transmission delay requirement. Alternatively, for example, the network device may determine an end of the third data set.

FIG. 10B is an example of a transmission method according to an embodiment of this application. The method is described by using interaction between a terminal device, a server, a network device 1, and a network device 2 as an example. Certainly, an action of the terminal device in the method may alternatively be performed by an apparatus/a module in the terminal device, for example, a chip, a processor, or a processing unit in the terminal device. An action of the network device 1 in the method may alternatively be performed by an apparatus/a module in the network device 1, for example, a chip, a processor, or a processing unit in the network device 1. An action of the network device 2 in the method may alternatively be performed by an apparatus/a module in the network device 2, for example, a chip, a processor, or a processing unit in the network device 2. An action of the server in the method may alternatively be performed by an apparatus/a module in the server, for example, a chip, a processor, or a processing unit in the server. This is not specifically limited in this embodiment of this application. For example, as shown in FIG. 10B, the method 1000B includes the following steps.

Optionally, S1000B: The terminal device (or an APP layer of the terminal device) generates third indication information.

Optionally, when a third data set has been generated, if a third data set has been generated, when the terminal device determines that a third data set has been generated, or if the terminal device determines that a third data set has been generated, the terminal device generates the third indication information. For descriptions of the third indication information, refer to the descriptions in the method 1000. Details are not described herein again.

Optionally, S1010B: The terminal device (or the APP layer of the terminal device) sends the third indication information to the server. Accordingly, the server receives the third indication information from the terminal device (or the APP layer of the terminal device).

Optionally, when the third data set has been generated, if the third data set has been generated, when the terminal device determines that the third data set has been generated, or if the terminal device determines that the third data set has been generated, the terminal device sends the third indication information to the server.

Optionally, S1020B: The server sends third indication information to the network device 1 (or a core network device). Accordingly, the network device 1 (or the core network device) receives the third indication information from the server.

Optionally, S1030B: The network device 1 (or the core network device) sends third indication information to the terminal device (or a NAS layer of the terminal device). Accordingly, the terminal device (or the NAS layer of the terminal device) receives the third indication information from the network device 1 (or the core network device).

S1040B: The terminal device (or an AS layer of the terminal device) sends third indication information to the network device 2 (or an access network device). Accordingly, the network device 2 (or the access network device) receives the third indication information from the terminal device (or the AS layer of the terminal device).

Optionally, S1050B: The network device 2 (or the access network device) determines a data amount of the third data set based on the third indication information.

Optionally, S1060B: The network device 2 (or the access network device) determines a scheduling policy based on the third indication information.

It should be noted that the third indication information in any one or more of S1000B (or S1010B), S1020B, S1030B, and S1040B is not necessarily the same. This is not limited in this application. The third indication information may be the same, or may be different.

In this embodiment of this application, the network device learns of the data amount of the third data set. Further, the network device may perform adjustment such as resource scheduling based on the third indication information, to ensure a data transmission delay requirement. Alternatively, for example, the network device may determine an end of the third data set.

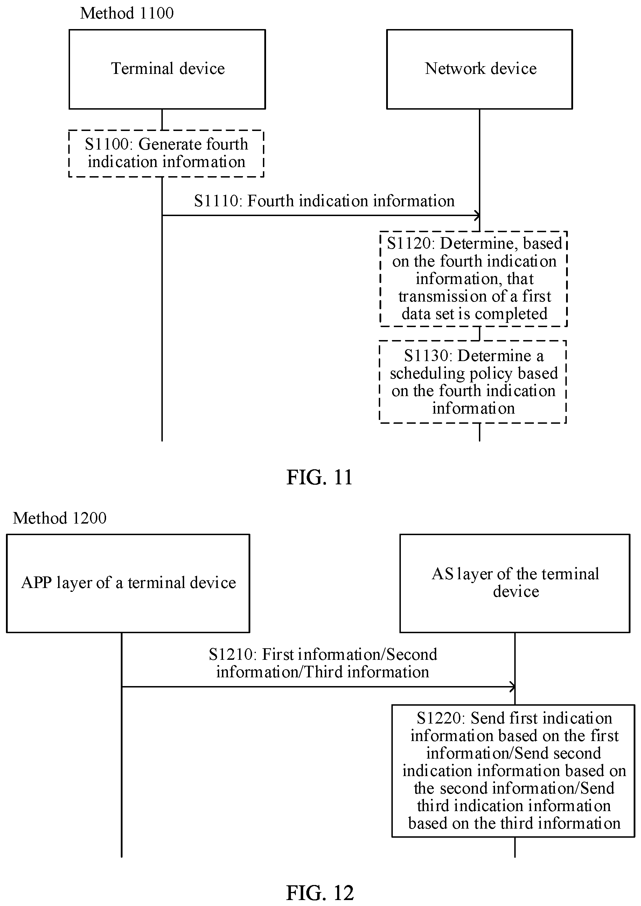

FIG. 11 is an example of a transmission method according to an embodiment of this application. The method is described by using interaction between a terminal device and a network device as an example. Certainly, an action of the terminal device in the method may alternatively be performed by an apparatus/a module in the terminal device, for example, a chip, a processor, or a processing unit in the terminal device. An action of the network device in the method may alternatively be performed by an apparatus/a module in the network device, for example, a chip, a processor, or a processing unit in the network device. This is not specifically limited in this embodiment of this application. For example, as shown in FIG. 11, the method 1100 includes the following steps.

Optionally, S1100, the terminal device generates fourth indication information.

For example, generating may include/be replaced with triggering. For example, generating the fourth indication information may include/be replaced with triggering sending of the fourth indication information.

Optionally, when transmission of a first data set is completed, or if transmission of a first data set is completed, the terminal device generates the fourth indication information.

Optionally, when transmission of the first data set is completed, and there is a second data set, the terminal device generates the fourth indication information.

Optionally, if transmission of the first data set is completed, and there is a second data set, the terminal device generates the fourth indication information.

S1110: When transmission of the first data set is completed, the terminal device sends the fourth indication information to the network device.

Accordingly, the network device receives the fourth indication information from the terminal device.

For example, the fourth indication information indicates that transmission of the first data set is completed. For example, the fourth indication information may include information indicating that transmission of the first data set is completed.

For example, the fourth indication information may be sent by using a MAC CE, the fourth indication information may be sent by using a PUCCH resource, the fourth indication information may be sent by using a PUSCH resource, the fourth indication information may be sent by using an RRC message, the fourth indication information may be sent by using a PDCP control PDU, or the fourth indication information may be sent by using an RLC control PDU. This is not limited in this embodiment of this application.

Optionally, when transmission of the first data set is completed, and there is a second data set, the terminal device sends the fourth indication information to the network device.

Optionally, if transmission of the first data set is completed, and there is a second data set, the terminal device sends the fourth indication information to the network device. Optionally, the first data set is transmitted before the second data set. Optionally, the first data set is generated before the second data set.

Optionally, in a possible implementation, that transmission of the first data set is completed may include/be replaced with any one of the following:
Sending of a first MAC PDU corresponding to a last piece of data in the first data set is completed;
a first MAC PDU corresponding to a last piece of data in the first data set is delivered to a physical layer; or
the terminal device includes, in a first MAC PDU, a last piece of data corresponding to the first data set.

Optionally, in a possible implementation, after the terminal device includes, in the first MAC PDU, the last piece of data corresponding to the first data set, when there is still a remaining resource in the first MAC PDU, the terminal device may include the fourth indication information in the first MAC PDU for sending. This is not limited in this embodiment of this application.

Optionally, S1120: The network device determines, based on the fourth indication information, that transmission of the first data set is completed.

Optionally, S1130: The network device determines a scheduling policy based on the fourth indication information.

In this embodiment of this application, the terminal device sends, to the network device, the fourth indication information indicating that transmission of the first data set is completed, so that the network device learns that transmission of the first data set has been completed. Further, the network device may adjust the scheduling policy based on the fourth indication information. Alternatively, for example, the network device may determine an end of the first data set.

Further, optionally, the transmission method provided in this embodiment of this application further includes: The terminal device sends first indication information to the network device, where the first indication information may indicate that the second data set has been generated. For descriptions of the first indication information, refer to the related descriptions in the method 500. Details are not described herein again.

Further, optionally, the transmission method provided in this embodiment of this application further includes: The terminal device sends second indication information to the network device, where the second indication information may indicate waiting time or remaining time of the second data set, and the waiting time or the remaining time is determined based on generation time of the second data set. For descriptions of the second indication information, refer to the related descriptions in the method 700. Details are not described herein again.

Further, optionally, the transmission method provided in this embodiment of this application further includes: The terminal device sends third indication information to the network device, where the third indication information may indicate a data amount of a third data set. For descriptions of the third indication information, refer to the descriptions in the method 1000. Details are not described herein again.

FIG. 12 is a diagram of interaction between an APP layer of a terminal device and an AS layer of the terminal device according to an embodiment of this application. As shown in FIG. 12, a method 1200 includes the following steps.

S1210: The APP layer of the terminal device sends first information to the AS layer of the terminal device. Accordingly, the AS layer of the terminal device receives the first information from the APP layer of the terminal device.

Alternatively, S1210: The APP layer of the terminal device sends second information to the AS layer of the terminal device. Accordingly, the AS layer of the terminal device receives the second information from the APP layer of the terminal device.

Alternatively, S1210: The APP layer of the terminal device sends third information to the AS layer of the terminal device. Accordingly, the AS layer of the terminal device receives the third information from the APP layer of the terminal device.

For example, the first information may indicate that a second data set has been generated, as described in the method 500. Optionally, the APP layer of the terminal device sends the first information to the AS layer of the terminal device when a first condition is satisfied; or the APP layer of the terminal device sends the first information to the AS layer of the terminal device when a first condition and a second condition are satisfied. This is not limited in this embodiment of this application.

Alternatively, for example, the second information may indicate waiting time, remaining time, or generation time, as described in the method 700. The AS layer of the terminal device may determine the waiting time, the remaining time, or the generation time based on the second information. Optionally, when a third condition is satisfied, or when a third condition and a fourth condition are satisfied, the APP layer of the terminal device sends the second information to the AS layer of the terminal device.

Alternatively, the third information may indicate a data amount of data that is in a third data set and that the APP layer of the terminal device includes or a data amount of the third data set, as described in the method 1000. The AS layer of the terminal device determines the data amount of the third data set based on the third information. Optionally, when the third data set has been generated, if the third data set has been generated, when the terminal device determines that the third data set has been generated, or if the terminal device determines that the third data set has been generated, the APP layer of the terminal device may send the third information to the AS layer of the terminal device.

In a possible implementation, the AS layer of the terminal device does not receive the first information, the second information, or the third information from the APP layer of the terminal device, and the AS layer of the terminal device has not received the second data set or the third data set delivered by the APP layer of the terminal device.

Optionally, in this embodiment of this application, the APP layer of the terminal device may send information (for example, the first information, the second information, or the third information) to the AS layer of the terminal device via an attention command (ATtention Command, AT command) or in another manner. This is not limited in this application.

Optionally, S1220: The AS layer of the terminal device sends first indication information to A network device based on the first information.

Optionally, the AS layer of the terminal device sends, to the network device based on the first information, the first indication information described in the method 500.

Optionally, the AS layer of the terminal device sends, to the network device based on the second information, the second indication information described in the method 700.

Optionally, the AS layer of the terminal device sends, to the network device based on the third information, the third indication information described in the method 1000.

According to the method provided in this embodiment of this application, the AS layer of the terminal device determines, based on the first information/second information/third information sent by the APP layer of the terminal device to the AS layer of the terminal device, the first indication information/second indication information/third indication information that is to be sent by the AS layer of the terminal device to the network device.

The foregoing mainly describes the solutions provided in embodiments of this application from a perspective of interaction between the terminal device and the network device (the network device 1 and/or the network device 2). Correspondingly, embodiments of this application further provide a communication apparatus, and the communication apparatus is configured to implement the foregoing methods. The communication apparatus may be the terminal device in the foregoing method embodiments, an apparatus including the foregoing terminal device, or a component that may be used in the terminal device. Alternatively, the communication apparatus may be the network device in the foregoing method embodiments, an apparatus including the foregoing network device, or a component that may be used in the network device. It may be understood that, to implement the foregoing functions, the communication apparatus includes corresponding hardware structures and/or software modules for performing the functions. A person skilled in the art should be easily aware that, with reference to the units and algorithm steps in the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that division into modules in embodiments of this application is an example, and is merely logical function division. During actual implementation, there may be another division manner.

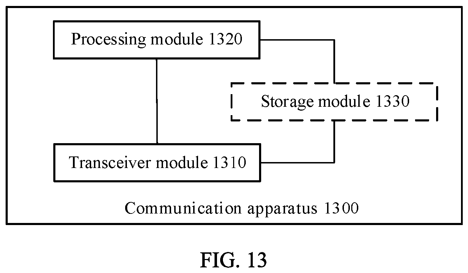

For example, FIG. 13 is a diagram of a communication apparatus according to an embodiment of this application. For example, the communication apparatus is the terminal device (which may be the chip in the terminal device, the module in the terminal device, or the internal apparatus in the terminal device) in the foregoing method embodiments. The terminal device includes a transceiver module 1310 and a processing module 1320. The transceiver module 1310 may also be referred to as a transceiver unit, and is configured to implement a transceiver function. For example, the transceiver module 1310 may be a transceiver circuit, a transceiver, or a communication interface.

In a solution, the transceiver module 1310 is configured to send first indication information.

In this embodiment of this application, the first indication information indicates that a second data set has been generated.

In this embodiment of this application, that the transceiver module 1310 is configured to send the first indication information includes:

When a first condition is satisfied, or when a first condition and a second condition are satisfied, the transceiver module 1310 is configured to send the first indication information, where the first condition includes that the second data set has been generated or that the terminal device determines that the second data set has been generated; and the second condition includes that an access AS layer of the terminal device does not obtain the second data set or that transmission of a first data set has not been completed, where the first data set is transmitted before the second data set.

In this embodiment of this application, that the second data set has been generated includes: The AS layer of the terminal device determines, based on first information from an application APP layer of the terminal device, that the second data set has been generated; or the AS layer of the terminal device receives first information from an APP layer of the terminal device, where the first information indicates that the second data set has been generated.

In this embodiment of this application, that transmission of the first data set has not been completed includes: One or more of a first logical channel LCH, a first packet data convergence protocol PDCP entity, a first radio link control RLC entity, a first data radio bearer DRB, the AS layer of the terminal device, and the APP layer of the terminal device include data in the first data set.

In this embodiment of this application, the second data set is associated with one or more of the first LCH, the first PDCP entity, the first RLC entity, the first DRB, and a first quality of service QoS flow; and/or the first data set is associated with one or more of the first LCH, the first PDCP entity, the first RLC entity, the first DRB, and the first QoS flow.

In this embodiment of this application, that the second data set has been generated includes: Partial data in the second data set has been generated; or
all data in the second data set has been generated.

In this embodiment of this application, the first indication information includes information about a data amount of the second data set.

In this embodiment of this application, when transmission of the first data set is completed, the transceiver module 1310 is further configured to send fourth indication information, where the fourth indication information indicates that sending of data in the first data set is completed, and the first data set is transmitted before the second data set.

In this embodiment of this application, the transceiver module 1310 is further configured to send third indication information, where the third indication information indicates a data amount of a third data set, the third data set is the first data set or the second data set, the first data set is transmitted before the second data set, and the data amount of the third data set includes a data amount of data that is in the third data set and that the APP layer of the terminal device includes.

In this embodiment of this application, the transceiver module 1310 is further configured to send second indication information, where the second indication information indicates waiting time, remaining time, or generation time of the second data set, and the waiting time or the remaining time is determined based on the generation time of the second data set.

All related content of the steps in the foregoing method embodiments may be cited in function descriptions of the corresponding functional modules. Details are not described herein again. Optionally, the communication apparatus 1300 may further include a storage module 1330. The storage module 1330 may be configured to store instructions and/or data, and the processing module 1320 may read the instructions and/or the data in the storage module 1330.

In this embodiment of this application, the terminal device is presented in a form of obtaining each functional module through division in an integrated manner. The "module" herein may be a specified ASIC, a circuit, a processor that executes one or more software or firmware programs and a memory, an integrated logic circuit, and/or another device that can provide the foregoing functions. In a simple embodiment, a person skilled in the art may figure out that the terminal device may be in a form of the communication apparatus 400 shown in FIG. 4A.

For example, the processor 401 in the communication apparatus 400 shown in FIG. 4A may invoke the computer-executable instructions stored in the memory 403, to cause the communication apparatus 400 to perform the communication methods in the foregoing method embodiments.

Specifically, functions/implementation processes of the transceiver module 1310 and the processing module 1320 in FIG. 13 may be implemented by the processor 401 in the communication apparatus 400 shown in FIG. 4A by invoking the computer-executable instructions stored in the memory 403. Alternatively, a function/an implementation process of the processing module 1320 in FIG. 13 may be implemented by the processor 401 in the communication apparatus 400 shown in FIG. 4 by invoking the computer-executable instructions stored in the memory 403, and a function/an implementation process of the transceiver module 1310 in FIG. 13 may be implemented by the communication interface 402 in the communication apparatus 400 shown in FIG. 4.

The terminal device (which may be the chip in the terminal device, the module in the terminal device, or the internal apparatus in the terminal device) provided in this embodiment of this application may perform the foregoing signal transmission methods. Therefore, for technical effects that can be achieved by the terminal device, refer to the foregoing method embodiments. Details are not described herein again.

For example, FIG. 13 is a diagram of a communication apparatus according to an embodiment of this application. For example, the communication apparatus is the terminal device (which may be the chip in the terminal device, the module in the terminal device, or the internal apparatus in the terminal device) in the foregoing method embodiments. The terminal device includes a transceiver module 1310 and a processing module 1320. The transceiver module 1310 may also be referred to as a transceiver unit, and is configured to implement a transceiver function. For example, the transceiver module 1310 may be a transceiver circuit, a transceiver, or a communication interface.

In a solution, the transceiver module 1310 is configured to send second indication information.

In this embodiment of this application, the second indication information indicates waiting time, remaining time, or generation time of a second data set, and the waiting time or the remaining time is determined based on the generation time of the second data set.

In this embodiment of this application, the waiting time includes: waiting time of the second data set before arrival at an access AS layer of the terminal device; or waiting time of the second data set at an application APP layer of the terminal device.

In this embodiment of this application, that the remaining time is determined based on the generation time of the second data set includes: The remaining time is determined based on the generation time of the second data set and first time, where the first time is sending time of the second indication information, generation time of the second indication information, determining time of the second indication information, time separated from the sending time of the second indication information by first duration, time separated from the generation time of the second indication information by second duration, or time separated from the determining time of the second indication information by third duration.

In this embodiment of this application, that the transceiver module 1310 is configured to send the second indication information includes: When a third condition is satisfied, or when a third condition and a fourth condition are satisfied, the transceiver module 1310 is configured to send the second indication information, where the third condition includes that the AS layer of the terminal device obtains the second data set; and the fourth condition includes that transmission of a first data set has not been completed when the second data set is generated, where the first data set is transmitted before the second data set.

In this embodiment of this application, transmission of the first data set has not been completed includes: Any one or more of a first logical channel LCH, a first packet data convergence protocol PDCP entity, a first radio link control RLC entity, a first data radio bearer DRB, the AS layer of the terminal device, and the APP layer of the terminal device include data in the first data set.

In this embodiment of this application, the second data set is associated with any one or more of the first LCH, the first PDCP entity, the first RLC entity, the first DRB, and a first quality of service QoS flow; and/or the first data set is associated with any one or more of the first LCH, the first PDCP entity, the first RLC entity, the first DRB, and the first QoS flow.

In this embodiment of this application, the generation time of the second data set includes: generation time of partial data in the second data set; or generation time of all data in the second data set.

In this embodiment of this application, the second indication information further includes information about a data amount of the second data set.

In this embodiment of this application, when transmission of the first data set is completed, the transceiver module 1310 is further configured to send fourth indication information, where the fourth indication information indicates that sending of data in the first data set is completed, and the first data set is transmitted before the second data set.

In this embodiment of this application, the transceiver module 1310 is further configured to send third indication information, where the third indication information indicates a data amount of a third data set, the third data set is the first data set or the second data set, the first data set is transmitted before the second data set, and the data amount of the third data set includes a data amount of data that is in the third data set and that the application APP layer of the terminal device includes.

All related content of the steps in the foregoing method embodiments may be cited in function descriptions of the corresponding functional modules. Details are not described herein again. Optionally, the communication apparatus 1300 may further include a storage module 1330. The storage module 1330 may be configured to store instructions and/or data, and the processing module 1320 may read the instructions and/or the data in the storage module 1330.

In this embodiment of this application, the terminal device is presented in a form of obtaining each functional module through division in an integrated manner. The "module" herein may be a specified ASIC, a circuit, a processor that executes one or more software or firmware programs and a memory, an integrated logic circuit, and/or another device that can provide the foregoing functions. In a simple embodiment, a person skilled in the art may figure out that the terminal device may be in a form of the communication apparatus 400 shown in FIG. 4A.

For example, the processor 401 in the communication apparatus 400 shown in FIG. 4A may invoke the computer-executable instructions stored in the memory 403, to cause the communication apparatus 400 to perform the communication methods in the foregoing method embodiments.

Specifically, functions/implementation processes of the transceiver module 1310 and the processing module 1320 in FIG. 13 may be implemented by the processor 401 in the communication apparatus 400 shown in FIG. 4A by invoking the computer-executable instructions stored in the memory 403. Alternatively, a function/an implementation process of the processing module 1320 in FIG. 13 may be implemented by the processor 401 in the communication apparatus 400 shown in FIG. 4 by invoking the computer-executable instructions stored in the memory 403, and a function/an implementation process of the transceiver module 1310 in FIG. 13 may be implemented by the communication interface 402 in the communication apparatus 400 shown in FIG. 4.

The terminal device (which may be the chip in the terminal device, the module in the terminal device, or the internal apparatus in the terminal device) provided in this embodiment of this application may perform the foregoing signal transmission methods. Therefore, for technical effects that can be achieved by the terminal device, refer to the foregoing method embodiments. Details are not described herein again.

For example, FIG. 13 is a diagram of a communication apparatus according to an embodiment of this application. For example, the communication apparatus is the terminal device (which may be the chip in the terminal device, the module in the terminal device, or the internal apparatus in the terminal device) in the foregoing method embodiments. The terminal device includes a transceiver module 1310 and a processing module 1320. The transceiver module 1310 may also be referred to as a transceiver unit, and is configured to implement a transceiver function. For example, the transceiver module 1310 may be a transceiver circuit, a transceiver, or a communication interface.

In a solution, the transceiver module 1310 is configured to send third indication information.

In this embodiment of this application, the third indication information indicates a data amount of a third data set, and the data amount of the third data set includes a data amount of data that is in the third data set and that an application APP layer of the terminal device includes.

In this embodiment of this application, that the transceiver module 1310 is configured to send the third indication information includes: When the third data set has been generated, or when the terminal device determines that the third data set has been generated, the transceiver module 1310 is configured to send the third indication information.

In this embodiment of this application, that the third data set has been generated includes: Partial data in the third data set has been generated; or
all data in the third data set has been generated.

In this embodiment of this application, that the terminal device determines that the third data set has been generated includes: An AS layer of the terminal device determines, based on third information from the application APP layer of the terminal device, that the third data set has been generated; or an AS layer of the terminal device receives third information from the APP layer of the terminal device, where the third information indicates that the third data set has been generated.

In this embodiment of this application, when transmission of the third data set is completed, the transceiver module 1310 is further configured to send fourth indication information, where the fourth indication information indicates that transmission of the third data set is completed.

All related content of the steps in the foregoing method embodiments may be cited in function descriptions of the corresponding functional modules. Details are not described herein again. Optionally, the communication apparatus 1300 may further include a storage module 1330. The storage module 1330 may be configured to store instructions and/or data, and the processing module 1320 may read the instructions and/or the data in the storage module 1330.

In this embodiment of this application, the terminal device is presented in a form of obtaining each functional module through division in an integrated manner. The "module" herein may be a specified ASIC, a circuit, a processor that executes one or more software or firmware programs and a memory, an integrated logic circuit, and/or another device that can provide the foregoing functions. In a simple embodiment, a person skilled in the art may figure out that the terminal device may be in a form of the communication apparatus 400 shown in FIG. 4A.

For example, the processor 401 in the communication apparatus 400 shown in FIG. 4A may invoke the computer-executable instructions stored in the memory 403, to cause the communication apparatus 400 to perform the communication methods in the foregoing method embodiments.

Specifically, functions/implementation processes of the transceiver module 1310 and the processing module 1320 in FIG. 13 may be implemented by the processor 401 in the communication apparatus 400 shown in FIG. 4A by invoking the computer-executable instructions stored in the memory 403. Alternatively, a function/an implementation process of the processing module 1320 in FIG. 13 may be implemented by the processor 401 in the communication apparatus 400 shown in FIG. 4 by invoking the computer-executable instructions stored in the memory 403, and a function/an implementation process of the transceiver module 1310 in FIG. 13 may be implemented by the communication interface 402 in the communication apparatus 400 shown in FIG. 4.

The terminal device (which may be the chip in the terminal device, the module in the terminal device, or the internal apparatus in the terminal device) provided in this embodiment of this application may perform the foregoing signal transmission methods. Therefore, for technical effects that can be achieved by the terminal device, refer to the foregoing method embodiments. Details are not described herein again.

For example, FIG. 13 is a diagram of a communication apparatus according to an embodiment of this application. For example, the communication apparatus is the terminal device (which may be the chip in the terminal device, the module in the terminal device, or the internal apparatus in the terminal device) in the foregoing method embodiments. The terminal device includes a transceiver module 1310 and a processing module 1320. The transceiver module 1310 may also be referred to as a transceiver unit, and is configured to implement a transceiver function. For example, the transceiver module 1310 may be a transceiver circuit, a transceiver, or a communication interface.

In a solution, the transceiver module 1310 is configured to: when transmission of a first data set is completed, send fourth indication information, where the fourth indication information indicates that transmission of the first data set is completed.

In this embodiment of this application, that the transceiver module 1310 is configured to send the fourth indication information includes: When transmission of the first data set is completed, and there is a second data set, the transceiver module 1310 is configured to send the fourth indication information, where the first data set is transmitted before the second data set.

In this embodiment of this application, that transmission of the first data set is completed includes any one or more of the following: Sending of a first multiple access channel protocol data unit MAC protocol data unit PDU corresponding to a last piece of data corresponding to the first data set is completed; a first MAC PDU corresponding to a last piece of data corresponding to the first data set is delivered to a physical layer; or the terminal device includes, in a first MAC PDU, a last piece of data corresponding to the first data set.

In this embodiment of this application, that the transceiver module 1310 is configured to send the fourth indication information includes: sending the fourth indication information by using a physical uplink control channel PUCCH resource or a physical uplink shared channel PUSCH resource; or sending the fourth indication information by using a MAC control element CE, a packet data convergence protocol PDCP control PDU, or a radio link control RLC control PDU.

All related content of the steps in the foregoing method embodiments may be cited in function descriptions of the corresponding functional modules. Details are not described herein again. Optionally, the communication apparatus 1300 may further include a storage module 1330. The storage module 1330 may be configured to store instructions and/or data, and the processing module 1320 may read the instructions and/or the data in the storage module 1330.

In this embodiment of this application, the terminal device is presented in a form of obtaining each functional module through division in an integrated manner. The "module" herein may be a specified ASIC, a circuit, a processor that executes one or more software or firmware programs and a memory, an integrated logic circuit, and/or another device that can provide the foregoing functions. In a simple embodiment, a person skilled in the art may figure out that the terminal device may be in a form of the communication apparatus 400 shown in FIG. 4A.

For example, the processor 401 in the communication apparatus 400 shown in FIG. 4A may invoke the computer-executable instructions stored in the memory 403, to cause the communication apparatus 400 to perform the communication methods in the foregoing method embodiments.

Specifically, functions/implementation processes of the transceiver module 1310 and the processing module 1320 in FIG. 13 may be implemented by the processor 401 in the communication apparatus 400 shown in FIG. 4A by invoking the computer-executable instructions stored in the memory 403. Alternatively, a function/an implementation process of the processing module 1320 in FIG. 13 may be implemented by the processor 401 in the communication apparatus 400 shown in FIG. 4 by invoking the computer-executable instructions stored in the memory 403, and a function/an implementation process of the transceiver module 1310 in FIG. 13 may be implemented by the communication interface 402 in the communication apparatus 400 shown in FIG. 4.

The terminal device (which may be the chip in the terminal device, the module in the terminal device, or the internal apparatus in the terminal device) provided in this embodiment of this application may perform the foregoing signal transmission methods. Therefore, for technical effects that can be achieved by the terminal device, refer to the foregoing method embodiments. Details are not described herein again.

It should be understood that one or more of the modules or units may be implemented by software, hardware, or a combination thereof. When any one of the modules or units is implemented by software, the software exists in a form of computer program instructions, and is stored in a memory, and a processor may be configured to execute the program instructions and implement the foregoing method procedures. The processor may be built into a SoC (system on chip) or an ASIC, or may be an independent semiconductor chip. The processor includes a core for executing software instructions to perform operations or processing, and may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and data. The processor may invoke program code stored in the memory, to indicate the communication apparatus to perform the method in any one of the foregoing method embodiments. Certainly, the communication apparatus may not include a memory. When the communication apparatus is the chip system, the communication device may include a chip, or may include the chip and another discrete device. This is not specifically limited in this embodiment of this application.

Optionally, an embodiment of this application further provides a computer-readable storage medium. The computer-readable storage medium stores a computer program or instructions. When the computer program or the instructions are run on a communication apparatus, the communication apparatus is caused to perform the method in any one of the foregoing method embodiments or any implementation thereof.

Optionally, an embodiment of this application further provides a communication system. The communication system includes the first network device in the foregoing method embodiments and the terminal device in the foregoing method embodiments.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments herein, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or step, and "a" or "one" does not exclude a case of plurality. A single processor or another unit may implement several functions enumerated in the claims. Some measures are recorded in dependent claims that are different from each other, but this does not mean that these measures cannot be combined to produce a good effect.

Although this application is described with reference to specific features and embodiments thereof, it is clear that various modifications and combinations may be made to this application without departing from the spirit and the scope of this application. Correspondingly, this specification and the accompanying drawings are merely example descriptions of this application defined by the appended claims, and are considered as covering any of or all modifications, variations, combinations, or equivalents within the scope of this application. It is clear that a person skilled in the art can make various modifications and variations to this application without departing from the spirit and the scope of this application. This application is intended to cover these modifications and variations of this application provided that these modifications and variations fall within the scope of the claims of this application and their equivalent technologies.

## Claims

1. A transmission method, wherein the method is applied to a terminal device, and the method comprises:
sending first indication information, wherein
the first indication information indicates that a second data set has been generated.

2. The method according to claim 1, wherein sending the first indication information comprises:
when a first condition is satisfied, or when a first condition and a second condition are satisfied, sending the first indication information, wherein
the first condition comprises that the second data set has been generated or that the terminal device determines that the second data set has been generated; and
the second condition comprises that an access AS layer of the terminal device does not obtain the second data set or that transmission of a first data set has not been completed, wherein the first data set is transmitted before the second data set.

3. The method according to claim 2, wherein that the second data set has been generated comprises:
the AS layer of the terminal device determines, based on first information from an application APP layer of the terminal device, that the second data set has been generated; or
the AS layer of the terminal device receives first information from an APP layer of the terminal device, wherein
the first information indicates that the second data set has been generated.

4. The method according to claim 2 or 3, wherein that transmission of the first data set has not been completed comprises:
one or more of a first logical channel LCH, a first packet data convergence protocol PDCP entity, a first radio link control RLC entity, a first data radio bearer DRB, the AS layer of the terminal device, and the APP layer of the terminal device comprise data in the first data set.

5. The method according to any one of claims 1 to 4, wherein the second data set is associated with one or more of the first LCH, the first PDCP entity, the first RLC entity, the first DRB, and a first quality of service QoS flow; and/or
the first data set is associated with one or more of the first LCH, the first PDCP entity, the first RLC entity, the first DRB, and the first QoS flow.

6. The method according to any one of claims 1 to 5, wherein that the second data set has been generated comprises:
partial data in the second data set has been generated; or
all data in the second data set has been generated.

7. The method according to any one of claims 1 to 6, wherein the first indication information comprises information about a data amount of the second data set.

8. The method according to any one of claims 1 to 7, wherein the method further comprises:
when transmission of the first data set is completed, sending fourth indication information, wherein the fourth indication information indicates that sending of data in the first data set is completed, and the first data set is transmitted before the second data set.

9. The method according to any one of claims 1 to 8, wherein the method further comprises:
sending third indication information, wherein
the third indication information indicates a data amount of a third data set, the third data set is the first data set or the second data set, the first data set is transmitted before the second data set, and the data amount of the third data set comprises a data amount of data that is in the third data set and that the APP layer of the terminal device comprises.

10. The method according to any one of claims 1 to 9, wherein the method further comprises:
sending second indication information, wherein
the second indication information indicates waiting time, remaining time, or generation time of the second data set, and the waiting time or the remaining time is determined based on the generation time of the second data set.

11. A transmission method, wherein the method is applied to a terminal device, and the method comprises:
sending second indication information, wherein
the second indication information indicates waiting time, remaining time, or generation time of a second data set, and the waiting time or the remaining time is determined based on the generation time of the second data set.

12. The method according to claim 11, wherein the waiting time comprises:
waiting time of the second data set before arrival at an access AS layer of the terminal device; or
waiting time of the second data set at an application APP layer of the terminal device.

13. The method according to claim 11, wherein that the remaining time is determined based on the generation time of the second data set comprises:
the remaining time is determined based on the generation time of the second data set and first time, wherein
the first time is sending time of the second indication information, generation time of the second indication information, determining time of the second indication information, time separated from the sending time of the second indication information by first duration, time separated from the generation time of the second indication information by second duration, or time separated from the determining time of the second indication information by third duration.

14. The method according to any one of claims 11 to 13, wherein the sending the second indication information comprises:
when a third condition is satisfied, or when a third condition and a fourth condition are satisfied, sending the second indication information, wherein
the third condition comprises that the AS layer of the terminal device obtains the second data set; and
the fourth condition comprises that transmission of a first data set has not been completed when the second data set is generated, wherein the first data set is transmitted before the second data set.

15. The method according to claim 14, wherein that transmission of the first data set has not been completed comprises:
any one or more of a first logical channel LCH, a first packet data convergence protocol PDCP entity, a first radio link control RLC entity, a first data radio bearer DRB, the AS layer of the terminal device, and the APP layer of the terminal device comprise data in the first data set.

16. The method according to any one of claims 11 to 15, wherein the second data set is associated with any one or more of the first LCH, the first PDCP entity, the first RLC entity, the first DRB, and a first quality of service QoS flow; and/or
the first data set is associated with any one or more of the first LCH, the first PDCP entity, the first RLC entity, the first DRB, and the first QoS flow.

17. The method according to any one of claims 11 to 16, wherein the generation time of the second data set comprises:
generation time of partial data in the second data set; or
generation time of all data in the second data set.

18. The method according to any one of claims 11 to 17, wherein the second indication information further comprises information about a data amount of the second data set.

19. The method according to any one of claims 11 to 18, wherein the method further comprises:
when transmission of the first data set is completed, sending fourth indication information, wherein the fourth indication information indicates that sending of data in the first data set is completed, and the first data set is transmitted before the second data set.

20. The method according to any one of claims 11 to 19, wherein the method further comprises:
sending third indication information, wherein
the third indication information indicates a data amount of a third data set, the third data set is the first data set or the second data set, the first data set is transmitted before the second data set, and the data amount of the third data set comprises a data amount of data that is in the third data set and that the application APP layer of the terminal device comprises.

21. A transmission method, wherein the method is applied to a terminal device, and the method comprises:
sending third indication information, wherein
the third indication information indicates a data amount of a third data set, and the data amount of the third data set comprises a data amount of data that is in the third data set and that an application APP layer of the terminal device comprises.

22. The method according to claim 21, wherein the sending the third indication information comprises:
when the third data set has been generated, or when the terminal device determines that the third data set has been generated, sending the third indication information.

23. The method according to claim 21 or 22, wherein that the third data set has been generated comprises:
partial data in the third data set has been generated; or
all data in the third data set has been generated.

24. The method according to any one of claims 21 to 23, wherein that the terminal device determines that the third data set has been generated comprises:
an AS layer of the terminal device determines, based on third information from the application APP layer of the terminal device, that the third data set has been generated; or
an AS layer of the terminal device receives third information from the APP layer of the terminal device, wherein
the third information indicates that the third data set has been generated.

25. The method according to any one of claims 21 to 24, wherein the method further comprises:
when transmission of the third data set is completed, sending fourth indication information, wherein the fourth indication information indicates that transmission of the third data set is completed.

26. A transmission method, wherein the method is applied to a terminal device, and the method comprises:
when transmission of a first data set is completed, sending fourth indication information, wherein
the fourth indication information indicates that transmission of the first data set is completed.

27. The method according to claim 26, wherein the sending the fourth indication information comprises:
when transmission of the first data set is completed, and there is a second data set, sending the fourth indication information, wherein the first data set is transmitted before the second data set.

28. The method according to claim 26 or 27, wherein that transmission of the first data set is completed comprises any one or more of the following:
sending of a first multiple access channel MAC protocol data unit PDU corresponding to a last piece of data corresponding to the first data set is completed;
a first MAC PDU corresponding to a last piece of data corresponding to the first data set is delivered to a physical layer; or
the terminal device comprises, in a first MAC PDU, a last piece of data corresponding to the first data set.

29. The method according to any one of claims 26 to 28, wherein the sending the fourth indication information comprises:
sending the fourth indication information by using a physical uplink control channel PUCCH resource or a physical uplink shared channel PUSCH resource; or
sending the fourth indication information by using a MAC control element CE, a packet data convergence protocol PDCP control PDU, or a radio link control RLC control PDU.

30. A communication apparatus, comprising:
a sending module, configured to send first indication information, wherein
the first indication information indicates that a second data set has been generated.

31. A communication apparatus, comprising:
a sending module, configured to send second indication information, wherein
the second indication information indicates waiting time, remaining time, or generation time of a second data set, and the waiting time or the remaining time is determined based on the generation time of the second data set.

32. A communication apparatus, comprising:
a sending module, configured to send third indication information, wherein
the third indication information indicates a data amount of a third data set, and the data amount of the third data set comprises a data amount of data that is in the third data set and that an application APP layer of a terminal device comprises.

33. A communication apparatus, comprising:
a sending module, configured to: when transmission of a first data set is completed, send fourth indication information, wherein
the fourth indication information indicates that transmission of the first data set is completed.

34. A communication apparatus, wherein the communication apparatus comprises a module configured to perform the method according to any one of claims 1 to 10, comprises a module configured to perform the method according to any one of claims 11 to 20, comprises a module configured to perform the method according to any one of claims 21 to 25, or comprises a module configured to perform the method according to any one of claims 26 to 29.

35. A communication apparatus, wherein the communication apparatus comprises a processor, and the processor is configured to perform the method according to any one of claims 1 to 10, configured to perform the method according to any one of claims 11 to 20, configured to perform the method according to any one of claims 21 to 25, or configured to perform the method according to any one of claims 26 to 29.

36. A computer-readable storage medium, wherein the computer-readable storage medium comprises instructions; and when the instructions are run, the method according to any one of claims 1 to 10 is caused to be implemented, the method according to any one of claims 11 to 20 is caused to be implemented, the method according to any one of claims 21 to 25 is caused to be implemented, or the method according to any one of claims 26 to 29 is caused to be implemented.

37. A computer program product, wherein the computer program product comprises instructions; and when the instructions are run, the method according to any one of claims 1 to 10 is caused to be implemented, the method according to any one of claims 11 to 20 is caused to be implemented, the method according to any one of claims 21 to 25 is caused to be implemented, or the method according to any one of claims 26 to 29 is caused to be implemented.
